# EUROPÄISCHE PATENTSCHRIFT

(11) **EP 3 965 393 B1**
(45) Veröffentlichungstag und Bekanntmachung des Hinweises auf die Patenterteilung: **07.06.2023**
(21) Anmeldenummer: 20194051.7
(22) Anmeldetag: 02.09.2020
(51) Int. Cl.: H04L 9/40, H04W 12/63, H04L 67/12

(54) **VERFAHREN ZUM AUTHENTIFIZIEREN DES ABSENDERS EINER NACHRICHT DURCH DEN EMPFÄNGER DER NACHRICHT, WOBEI DIE NACHRICHT DRAHTLOS ÜBER EINE ZWISCHENSTATION ÜBERTRAGEN WIRD, SYSTEM, ZWISCHENSTATION, EMPFÄNGER, COMPUTERPROGRAMM UND COMPUTERLESBARES MEDIUM**
METHOD, FOR AUTHENTICATING THE SENDER OF A MESSAGE BY THE RECIPIENT OF THE MESSAGE, WHEREBY THE MESSAGE IS WIRELESSLY TRANSMITTED VIA AN INTERMEDIATE STATION, SYSTEM, INTERMEDIATE STATION, RECEIVER, COMPUTER PROGRAM AND COMPUTER READABLE MEDIUM
PROCÉDÉ D'AUTHENTIFICATION DE L'EXPÉDITEUR D'UN MESSAGE PAR LE RÉCEPTEUR DU MESSAGE, LE MESSAGE ÉTANT TRANSMIS SANS FIL À L'AIDE D'UNE STATION INTERMÉDIAIRE, SYSTÈME, STATION INTERMÉDIAIRE, RÉCEPTEUR, PROGRAMME INFORMATIQUE ET SUPPORT LISIBLE PAR ORDINATEUR

(43) Veröffentlichungstag der Anmeldung: 09.03.2022
(73) Patentinhaber: Deutsche Telekom AG, 53113 Bonn (DE)
(72) Erfinder: WITYCH, Michael, 53227 Bonn (DE); SUDHOLT, Frank, 53604 Bad Honnef (DE); SCHMITT, Florian-Leon, 53227 Bonn (DE)
(74) Vertreter: Schwöbel, Thilo K.

(56) Entgegenhaltungen:
- US-A1- 2016 302 067
- US-B1- 8 370 629

## Beschreibung

### Stand der Technik

Die Erfindung betrifft ein Verfahren zum Authentifizieren des Absenders einer Nachricht durch den Empfänger der Nachricht, wobei die Nachricht drahtlos über eine Zwischenstation übertragen wird, wobei der Empfänger der Nachricht ein teilautonom oder autonom gesteuertes, sich bewegendes Fahrzeug oder ein stationäres Objekt ist, wobei der Absender zu unterschiedlichen Zeitpunkten potenziell unterschiedliche Absenderpositionen aufweist und der Empfänger zu unterschiedlichen Zeitpunkten potenziell unterschiedliche Empfängerpositionen aufweist.

Die Erfindung betrifft des Weiteren ein System zum Authentifizieren des Absenders einer Nachricht durch den Empfänger der Nachricht, wobei die Nachricht drahtlos über eine Zwischenstation übertragen wird, wobei der Empfänger der Nachricht ein teilautonom oder autonom gesteuertes, sich bewegendes Fahrzeug oder ein stationäres Objekt ist, wobei der Absender zu unterschiedlichen Zeitpunkten potenziell unterschiedliche Absenderpositionen aufweist und der Empfänger zu unterschiedlichen Zeitpunkten potenziell unterschiedliche Empfängerpositionen aufweist.

Die Erfindung betrifft ferner eine Zwischenstation zum Authentifizieren des Absenders einer Nachricht durch den Empfänger der Nachricht, wobei die Nachricht drahtlos über die Zwischenstation übertragen wird, wobei der Empfänger der Nachricht ein teilautonom oder autonom gesteuertes, sich bewegendes Fahrzeug oder ein stationäres Objekt ist, wobei der Absender zu unterschiedlichen Zeitpunkten potenziell unterschiedliche Absenderpositionen aufweist und der Empfänger zu unterschiedlichen Zeitpunkten potenziell unterschiedliche Empfängerpositionen aufweist.

Ferner betrifft die Erfindung einen Empfänger zum Authentifizieren des Absenders einer Nachricht durch den Empfänger der Nachricht, wobei die Nachricht drahtlos über eine Zwischenstation übertragen wird, wobei der Empfänger der Nachricht ein teilautonom oder autonom gesteuertes, sich bewegendes Fahrzeug oder ein stationäres Objekt ist, wobei der Absender zu unterschiedlichen Zeitpunkten potenziell unterschiedliche Absenderpositionen aufweist und der Empfänger zu unterschiedlichen Zeitpunkten potenziell unterschiedliche Empfängerpositionen aufweist.

Des Weiteren betrifft die Erfindung ein Computerprogramm umfassend Befehle, mit deren Hilfe die Schritte eines erfindungsgemäßen Verfahrens durchführbar sind, und ein computerlesbares Medium, vorgesehen zur Speicherung eines Computerprogramms, oder ein Datenträgersignal, vorgesehen zur Übertragung eines Computerprogramms, wobei das computerlesbare Medium oder das Datenträgersignal das erfindungsgemäße Computerprogramm speichert oder überträgt.

Zur Realisierung von zukünftigen Verkehrssystemen, insbesondere umfassend autonom fahrende bzw. autonom gesteuerte Fahrzeuge, ist es wünschenswert, wenn möglichst viele Verkehrsteilnehmer in der Lage sind Informationen bzw. Nachrichten auszutauschen, insbesondere um das Sicherheitsniveau zu erhöhen und die Anzahl und Schwere von Gefahrensituationen oder Gefährdungen sowohl von Personen als auch von Fahrzeugen oder Verkehrsinfrastruktureinrichtungen zu vermindern. Eine Voraussetzung bzw. die Grundlage für den Austausch bzw. die Übertragung von solchen Informationen bzw. solchen Nachrichten ist, dass die Informationen bzw. Nachrichten möglichst vertrauenswürdig übertragen werden, d.h. es sollte sowohl ein hohes Maß an Authentizität bzw. Authentifizierbarkeit des Nachrichteninhalts selbst als auch ein hohes Maß an Authentizität bzw. Authentifizierbarkeit des Absenders der Nachricht (insbesondere durch den Empfänger der Nachricht) möglich sein. Die US 2016/302067 A1 betrifft ein Endgerät und einen Authentifizierungsserver, der Positionsinformationen zur Authentifizierung verwendet. Die US 8370629 B1 bezieht sich auf die Bereitstellung eines kollektiven Teilens und Lernens von Standortinformationen innerhalb eines Netzwerks auf einer sicheren oder vertrauenswürdigen Basis.

### Offenbarung der Erfindung

Der Erfindung liegt die Aufgabe zugrunde, ein Verfahren zum Authentifizieren des Absenders einer Nachricht durch den Empfänger der Nachricht bereitzustellen, wobei die Nachricht drahtlos über eine Zwischenstation übertragen wird und wobei der Empfänger der Nachricht ein teilautonom oder autonom gesteuertes, sich bewegendes Fahrzeug oder ein stationäres Objekt ist, wobei es das Verfahren in vergleichsweise einfacher und effizienter Weise ermöglicht, sowohl eine schnelle Kommunikation zu ermöglichen als auch eine sichere bzw. abgesicherte (bzw. verifizierbare) Kommunikation zu ermöglichen.

Die Aufgabe wird erfindungsgemäß gelöst durch ein Verfahren, ein System, ein Zwischenstation, ein Empfänger, ein Computerprogramm und ein computerlesbares Medium wie definiert in den unabhängigen Ansprüche 1, 9, 10, 11, 12 bzw. 13. Vorteilhafte Weiterbildungen sind in den abhängigen Ansprüche definiert.

Es ist dadurch gemäß der vorliegenden Erfindung in vorteilhafter Weise möglich, dass in Vergleichsweise einfacher Art und Weise eine sehr sichere Authentifizierung des Senders oder Absenders einer Nachricht ermöglicht wird. Diese sehr sichere Authentifizierung beruht im Wesentlichen darauf bzw. wird dadurch unterstützt, dass im Resultat zwischen zwei kinematischen Objekten (d.h. dem Absender und dem Empfänger) eine (wenigstens drei Teilnachrichten umfassende) Nachricht gesendet wird, deren Absender zweifelsfrei mit einer wesentlich höheren Sicherheit als dies mit bekannten Verfahren möglich ist authentifiziert werden kann. Die Kommunikation erfolgt über eine dritte Instanz (bzw. Zwischenstation). Der Empfänger der Nachricht ist dann sehr sicher bzw. 100% sicher, dass er den Inhalt der Nachricht als richtig und umsetzbar einstufen kann, da der Absender als verifiziert gilt und der Inhalt der Nachricht innerhalb der extrem kurzen Zeitspanne im Millisekunden-Bereich nicht geändert worden sein kann. Erfindungsgemäß ist dies insbesondere für autonom fahrende Fahrzeuge sehr wichtig, welche solche Nachrichten erhalten sollen und aufgrund des Nachrichteninhalts Anweisungen automatisiert bzw. autonom ausführen sollen. Bei herkömmlicherweise bekannten Verfahren wird eine absolut sichere Authentifizierung des Absenders nicht realisiert; zwar werden hierbei theoretische Szenarien, z.B. im Bereich des autonomen Fahrens, in denen X-2-Car oder Car-2-Car Nachrichten vorkommen, benutzt, jedoch wird die herkömmlicherweise nicht realisierte absolute Sicherheit der Authentifizierung des Absenders von Nachrichten an insbesondere autonome Fahrzeuge zwar als zu erzielen oder zu ermöglichen vorausgesetzt, diese jedoch nicht praktisch erzielt.

Erfindungsgemäß ist es vorgesehen, dass zum Authentifizieren (durch den Empfänger einer Nachricht) des Absenders der Nachricht (welche drahtlos über eine Zwischenstation übertragen wird) in einem ersten Schritt zu einem ersten Zeitpunkt durch den Absender eine erste Absenderposition und eine erste Empfängerposition bestimmt und eine erste Teilnachricht zur Zwischenstation gesendet wird. Die erste Teilnachricht umfasst wenigstens die erste Absenderposition und die erste Empfängerposition. In einem zweiten Schritt wird zu einem nachfolgenden zweiten Zeitpunkt durch den Empfänger eine zweite Empfängerposition, eine zweite Empfängergeschwindigkeit und eine zweite Absenderposition bestimmt und es wird eine zweite Teilnachricht zur Zwischenstation gesendet. Die zweite Teilnachricht umfasst wenigstens die zweite Empfängerposition, die zweite Empfängergeschwindigkeit und die zweite Absenderposition. In einem dritten Schritt wird durch die Zwischenstation aus der ersten Empfängerposition, der zweiten Empfängergeschwindigkeit und der zweiten Empfängerposition eine erste Positionsabweichung hinsichtlich des Empfängers und aus der ersten Absenderposition und der zweiten Absenderposition eine zweite Positionsabweichung hinsichtlich des Absenders bestimmt. Der Absender der Nachricht wird nur dann authentifiziert (d.h. durch die Zwischenstation als authentifiziert eingestuft), wenn die erste und zweite Positionsabweichung kleiner sind als ein vorgegebener Maximalwert. Insbesondere in diesem Fall wird eine dritte Teilnachricht (mit positivem Authentifizierungsergebnis) zum Empfänger gesendet.

Erfindungsgemäß ist der Empfänger der Nachricht insbesondere ein teilautonom oder autonom gesteuertes, sich bewegendes Fahrzeug. Alternativ ist der Empfänger ein stationäres Objekt, beispielsweise eine Infrastruktureinrichtung eines Verkehrssystems wie etwa ein Verkehrsschild oder eine Mautstation oder Erfassungsstation oder dergleichen. Der Absender ist, zumindest potenziell (jedoch nicht zwingend), beweglich, d.h. erfindungsgemäß ist es möglich, dass der Absender zu unterschiedlichen Zeitpunkten potenziell unterschiedliche Absenderpositionen aufweist. In gleicher Weise ist der Empfänger, zumindest potenziell (jedoch ebenfalls nicht zwingend), beweglich, d.h. erfindungsgemäß ist es möglich, dass der Empfänger ebenfalls zu unterschiedlichen Zeitpunkten potenziell unterschiedliche Empfängerpositionen aufweist.

Gemäß einer bevorzugten Ausführungsform der vorliegenden Erfindung ist es vorgesehen, dass die Bestimmung - im ersten Schritt - der ersten Empfängerposition durch den Absender und die Bestimmung - im zweiten Schritt - der zweiten Absenderposition durch den Empfänger jeweils mittels eines Verfahrens zur Positionsdifferenzenermittlung zwischen Absender und Empfänger erfolgt, insbesondere mittels eines optischen oder elektrooptischen Verfahrens,
wobei die Zeitdifferenz zwischen dem ersten und dem zweiten Zeitpunkt insbesondere kleiner als oder gleich 200 ms ist, bevorzugt kleiner als oder gleich 150 ms, besonders bevorzugt kleiner als oder gleich 100 ms und ganz besonders bevorzugt kleiner als oder gleich 80 ms.

Hierdurch ist es erfindungsgemäß vorteilhaft möglich, dass die gegenseitige Positionsbestimmung von Absender und Empfänger über ein optisches oder elektrooptisches Verfahren erfolgt, welches zur Verbesserung der Authentifizierung bzw. zu einer Verbesserung des Sicherheitsniveaus der Authentifizierung benutzt wird. Somit ist es erfindungsgemäß vorteilhaft möglich, dass neben den üblichen herkömmlicherweise bekannten Techniken der Absicherung einer Kommunikation (etwa die Verwendung von Zertifikaten sowie die Benutzung von Verschlüsselungsverfahren) der dreidimensionale Abstand zwischen dem Empfänger (nachfolgend auch als AFZG bezeichnet) und dem Absender (nachfolgend auch als AINS bezeichnet) herangezogen wird; dieser dreidimensionale Abstand (bzw. dessen Nutzung) ist durch das erfindungsgemäße Verfahren auf die Reichweite der im Absender bzw. Empfänger verbauten oder vorhandenen optischen oder elektrooptischen Sensoren begrenzt (bei heute üblichen solchen Sensoren beispielsweise auf Reichweiten von maximal etwa 250 m bis 300 m). Durch die Nutzung solcher optischer oder elektrooptischer on-board Systeme der Teilnehmer (d.h. des Absenders und des Empfängers) ist es erfindungsgemäß diese "Naherkennung" von Fahrzeugmerkmalen und/oder der Fahrzeugposition (bzw. von Merkmalen von Absender und Empfänger und/oder der Position von Absender und Empfänger) des jeweils anderen Teilnehmers im erfindungsgemäßen Verfahren bzw. System zur Verbesserung bzw. zur Absicherung der Authentifizierung des Absenders heranzuziehen.

Gemäß einer weiteren Ausführungsform der vorliegenden Erfindung ist es vorgesehen, dass - zusätzlich zur Ermittlung der Positionsdifferenzen zwischen Absender und Empfänger - optische Merkmale oder optische Fahrzeugmerkmale des Empfängers und/oder des Absenders ermittelt oder bestimmt oder erkannt werden, um den Absender der Nachricht zu authentifizieren,
wobei insbesondere als optische Fahrzeugmerkmale
   -- die Fahrzeugform und/oder
   -- die Fahrzeugfarbe und/oder
   -- das Fahrzeugkennzeichen und/oder
   -- der Fahrzeugtyp und/oder
   -- Fahrzeugmaße,
insbesondere des Absenders durch den Empfänger, ermittelt oder bestimmt oder erkannt werden.

Hierdurch ist es erfindungsgemäß in vorteilhafter Weise möglich, dass erfindungsgemäß eine Verbesserung bzw. eine Absicherung der Authentifizierung des Absenders weiter verbessert wird.

Gemäß einer weiteren Ausführungsform der vorliegenden Erfindung ist es vorgesehen, dass - insbesondere zeitlich vor der Durchführung des ersten Schritts - die Geschwindigkeitsdifferenz zwischen Absender und Empfänger kleiner als oder gleich 50 km/h ist, bevorzugt kleiner als oder gleich 25 km/h, weiter bevorzugt kleiner als oder gleich 10 km/h, weiter bevorzugt kleiner als oder gleich 5 km/h, wobei die Geschwindigkeitsdifferenz insbesondere dem Betrag des Geschwindigkeitsdifferenzvektors zwischen Absender und Empfänger entspricht.

Dadurch dass die Geschwindigkeitsdifferenz zwischen Absender und Empfänger bevorzugt klein gewählt wird bzw. dass insbesondere der Bewegungszustand des Absenders (AINS) dahingehend verändert wird, dass die Geschwindigkeitsdifferenz zwischen Absender und Empfänger vergleichsweise klein ist, ist es erfindungsgemäß vorteilhaft möglich die erste und/oder zweite Positionsabweichung zu verringern und so zu einer weiter verbesserten bzw. sichereren Authentifizierung des Absenders der Nachricht beizutragen.

Gemäß einer weiteren Ausführungsform der vorliegenden Erfindung ist es vorgesehen, dass im ersten Schritt zum ersten Zeitpunkt durch den Absender neben der ersten Absenderposition und der ersten Empfängerposition zusätzlich eine erste Absendergeschwindigkeit bestimmt und als Teil der zweiten Teilnachricht zur Zwischenstation gesendet wird, wobei im dritten Schritt durch die Zwischenstation die zweite Positionsabweichung hinsichtlich des Absenders aus der ersten Absenderposition, der ersten Absendergeschwindigkeit und der zweiten Absenderposition bestimmt wird.

Hierdurch ist es gemäß solcher Ausführungsformen der Erfindung vorteilhaft möglich, dass erfindungsgemäß eine Verbesserung bzw. eine Absicherung der Authentifizierung des Absenders weiter verbessert wird, indem wiederum die erste und/oder zweite Positionsabweichung verringert wird.

Gemäß einer weiteren Ausführungsform der vorliegenden Erfindung ist es vorgesehen, dass die Zwischenstation wenigstens ein Teil der nachfolgenden oder alle nachfolgenden Stammdaten des Absenders und/oder des Empfängers umfasst oder darauf Zugriff hat:
-- eines oder mehrere Zertifikate, insbesondere kryptographische Zertifikate,
-- optische Fahrzeugmerkmale, insbesondere Fahrzeugform und/oder Fahrzeugfarbe,
-- Fahrzeugkennzeichen,
-- Fahrzeugtyp und/oder Fahrzeugmaße, insbesondere Länge, Breite und/oder Höhe,
-- Definition der Lage oder Positionierung der Eigenposition, insbesondere die Lage oder Positionierung eines Empfängers eines globalen Satellitennavigationssystems relativ zum Fahrzeug,
-- eine eindeutige Identitätsinformation, insbesondere eine Kommunikationsadresse oder Kommunikationsnummer, insbesondere in einem Mobilfunknetz,
-- eine aktuelle Statusinformation hinsichtlich des Empfängers und/oder des Absenders,
-- eine Information hinsichtlich erlaubter oder möglicher Nachrichteninhalte und/oder Befehlsinhalte für Dienste.

Hierdurch ist es gemäß der vorliegenden Erfindung in einfacher Weise möglich, die Kommunikation zwischen dem Absender und dem Empfänger der Nachricht und weiterhin auch die Authentifizierung des Absenders zu verbessern.

Gemäß einer weiteren Ausführungsform der vorliegenden Erfindung ist es vorgesehen, dass die erste Teilnachricht, die zweite Teilnachricht und die dritte Teilnachricht über ein Mobilfunkkommunikationsnetz, insbesondere ein Mobilfunknetz gemäß des 5G-Standards oder gemäß des public WLAN-Standards, übertragen wird, wobei die Übertragung der ersten, zweiten und dritten Teilnachricht mit einer Latenzzeit von kleiner als oder gleich 5 ms, bevorzugt von kleiner als oder gleich 3 ms, besonders bevorzugt von kleiner als oder gleich 1 ms erfolgt.

Hierdurch ist es erfindungsgemäß in vorteilhafter Weise möglich, dass die Übertragung der ersten, zweiten und dritten Teilnachricht bevorzugt sehr schnell, d.h. innerhalb vergleichsweise kurzer Zeitintervalle, erfolgt, während derer sich die Positionen sowohl des Absenders als auch des Empfängers, insbesondere bei einem vorgegebenen Maximalgeschwindigkeitsbereich oder Maximalgeschwindigkeitsdifferenzbereichs, auch nur derart zu ändern in der Lage sind, dass die vorgegebenen - vergleichsweise kleinen - Toleranzen (insbesondere hinsichtlich der ersten und zweiten Positionsabweichung) im Sinne eines hohen Sicherheitsniveaus bei der Authentifizierung des Absenders unterschritten werden können.

Gemäß einer weiteren Ausführungsform der vorliegenden Erfindung ist es vorgesehen, dass die Nachricht oder der Nachrichteninhalt der Nachricht vom Absender zum Empfänger mittels oder als Teil der ersten Teilnachricht und der dritten Teilnachricht übertragen wird, wobei insbesondere die Nachricht oder der Nachrichteninhalt als Teil der ersten und dritten Teilnachricht verschlüsselt übertragen wird, bevorzugt die erste, zweite und dritte Teilnachricht zumindest teilweise oder vollständig verschlüsselt übertragen wird.

Hierdurch ist es erfindungsgemäß in vorteilhafter Weise möglich, dass die eigentliche Nutzinformation der vom Absender zum Empfänger zu übertragenden Nachricht (d.h. deren Nachrichteninhalt) zum einen sicher - mittels oder als Teil der ersten Teilnachricht und mittels oder als Teil der zweiten Teilnachricht - zum Empfänger übertragen wird und ferner, dass dies insbesondere verschlüsselt erfolgt, d.h. durch die Verwendung einer Verschlüsselung der Teilnachrichten ist es erfindungsgemäß zusätzlich möglich, die Integrität der Nachrichtenübertragung (und die Authentizität des Absenders) sicherzustellen.

Des Weiteren wird die Aufgabe gelöst durch ein System zum Authentifizieren des Absenders einer Nachricht durch den Empfänger der Nachricht, wobei die Nachricht drahtlos über eine Zwischenstation übertragen wird, wobei der Empfänger der Nachricht ein teilautonom oder autonom gesteuertes, sich bewegendes Fahrzeug oder ein stationäres Objekt ist, wobei der Absender zu unterschiedlichen Zeitpunkten potenziell unterschiedliche Absenderpositionen aufweist und der Empfänger zu unterschiedlichen Zeitpunkten potenziell unterschiedliche Empfängerpositionen aufweist, wobei das System derart konfiguriert ist, dass:
-- zu einem ersten Zeitpunkt durch den Absender eine erste Absenderposition und eine erste Empfängerposition bestimmt wird und eine erste Teilnachricht zur Zwischenstation gesendet wird, wobei die erste Teilnachricht die erste Absenderposition und die erste Empfängerposition umfasst,
-- zu einem nachfolgenden zweiten Zeitpunkt durch den Empfänger eine zweite Empfängerposition, eine zweite Empfängergeschwindigkeit und eine zweite Absenderposition bestimmt wird und eine zweite Teilnachricht zur Zwischenstation gesendet wird, wobei die zweite Teilnachricht die zweite Empfängerposition, die zweite Empfängergeschwindigkeit und die zweite Absenderposition umfasst,
-- durch die Zwischenstation aus der ersten Empfängerposition, der zweiten Empfängergeschwindigkeit und der zweiten Empfängerposition eine erste Positionsabweichung hinsichtlich des Empfängers und aus der ersten Absenderposition und der zweiten Absenderposition eine zweite Positionsabweichung hinsichtlich des Absenders bestimmt wird, der Absender der Nachricht authentifiziert wird, wenn die erste und zweite Positionsabweichung kleiner sind als ein vorgegebener Maximalwert, und eine dritte Teilnachricht zum Empfänger gesendet wird.

Es ist dadurch gemäß der vorliegenden Erfindung in vorteilhafter Weise möglich, ein zum erfindungsgemäßen Verfahren korrespondierendes erfindungsgemäßes System bereitzustellen und somit zum Authentifizieren des Absenders einer Nachricht durch den Empfänger der Nachricht zu verwenden.

Die Aufgabe wird ferner gelöst durch eine Zwischenstation zum Authentifizieren des Absenders einer Nachricht durch den Empfänger der Nachricht, wobei die Nachricht drahtlos über die Zwischenstation übertragen wird, wobei der Empfänger der Nachricht ein teilautonom oder autonom gesteuertes, sich bewegendes Fahrzeug oder ein stationäres Objekt ist, wobei der Absender zu unterschiedlichen Zeitpunkten potenziell unterschiedliche Absenderpositionen aufweist und der Empfänger zu unterschiedlichen Zeitpunkten potenziell unterschiedliche Empfängerpositionen aufweist, wobei die Zwischenstation derart konfiguriert ist, dass:
-- die Zwischenstation eine erste Teilnachricht empfängt, wobei die erste Teilnachricht eine zu einem ersten Zeitpunkt durch den Absender bestimmte erste Absenderposition und eine zum ersten Zeitpunkt durch den Absender bestimmte erste Empfängerposition umfasst,
-- die Zwischenstation eine zweite Teilnachricht empfängt, wobei die zweite Teilnachricht eine zu einem nachfolgenden zweiten Zeitpunkt durch den Empfänger bestimmte zweite Empfängerposition, eine zum zweiten Zeitpunkt durch den Empfänger bestimmte zweite Empfängergeschwindigkeit und eine zum zweiten Zeitpunkt durch den Empfänger bestimmte zweite Absenderposition umfasst,
-- durch die Zwischenstation aus der ersten Empfängerposition, der zweiten Empfängergeschwindigkeit und der zweiten Empfängerposition eine erste Positionsabweichung hinsichtlich des Empfängers und aus der ersten Absenderposition und der zweiten Absenderposition eine zweite Positionsabweichung hinsichtlich des Absenders bestimmt wird, der Absender der Nachricht authentifiziert wird, wenn die erste und zweite Positionsabweichung kleiner sind als ein vorgegebener Maximalwert, und eine dritte Teilnachricht zum Empfänger gesendet wird.

Es ist dadurch gemäß der vorliegenden Erfindung in vorteilhafter Weise möglich, eine zum erfindungsgemäßen Verfahren korrespondierende erfindungsgemäße Zwischenstation bereitzustellen und somit zum Authentifizieren des Absenders einer Nachricht durch den Empfänger der Nachricht zu verwenden.

Ferner wird die Ausgabe gelöst durch einen Empfänger zum Authentifizieren des Absenders einer Nachricht durch den Empfänger der Nachricht, wobei die Nachricht drahtlos über eine Zwischenstation übertragen wird, wobei der Empfänger der Nachricht ein teilautonom oder autonom gesteuertes, sich bewegendes Fahrzeug oder ein stationäres Objekt ist, wobei der Absender zu unterschiedlichen Zeitpunkten potenziell unterschiedliche Absenderpositionen aufweist und der Empfänger zu unterschiedlichen Zeitpunkten potenziell unterschiedliche Empfängerpositionen aufweist, wobei der Empfänger derart konfiguriert ist, dass:
-- zu einem zweiten Zeitpunkt - nachdem in einem ersten Schritt zu einem ersten Zeitpunkt durch den Absender eine erste Absenderposition und eine erste Empfängerposition bestimmt und als Teil einer ersten Teilnachricht zur Zwischenstation gesendet wurde - durch den Empfänger eine zweite Empfängerposition, eine zweite Empfängergeschwindigkeit und eine zweite Absenderposition bestimmt und eine zweite Teilnachricht zur Zwischenstation gesendet wird, wobei die zweite Teilnachricht die zweite Empfängerposition, die zweite Empfängergeschwindigkeit und die zweite Absenderposition umfasst, und
-- durch den Empfänger eine dritte Teilnachricht empfangen wird, nachdem durch die Zwischenstation aus der ersten Empfängerposition, der zweiten Empfängergeschwindigkeit und der zweiten Empfängerposition eine erste Positionsabweichung hinsichtlich des Empfängers und aus der ersten Absenderposition und der zweiten Absenderposition eine zweite Positionsabweichung hinsichtlich des Absenders bestimmt wird und der Absender der Nachricht authentifiziert wird, wenn die erste und zweite Positionsabweichung kleiner sind als ein vorgegebener Maximalwert ist.

Es ist dadurch gemäß der vorliegenden Erfindung in vorteilhafter Weise möglich, ein zum erfindungsgemäßen Verfahren korrespondierender erfindungsgemäßer Empfänger bereitzustellen und somit zum Authentifizieren des Absenders einer Nachricht durch den Empfänger der Nachricht zu verwenden.

Des Weiteren wird die Ausgabe gelöst durch ein Computerprogramm umfassend Befehle, mit deren Hilfe die Schritte eines erfindungsgemäßen Verfahrens durchführbar sind, wenn das Computerprogramm auf einer programmierbaren Einrichtung, insbesondere auf dem Absender oder einer programmierbaren Einrichtung des Absenders und/oder auf dem Empfänger oder einer programmierbaren Einrichtung des Empfängers und/oder auf der Zwischenstation oder einer programmierbaren Einrichtung der Zwischenstation, ausgeführt wird.

Des Weiteren wird die Aufgabe gelöst durch ein computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das erfindungsgemäße Computerprogramm speichert oder überträgt oder wobei das computerlesbare Medium oder das Datenträgersignal den auf einer programmierbaren Einrichtung, insbesondere auf dem Absender oder einer programmierbaren Einrichtung des Absenders und/oder auf dem Empfänger oder einer programmierbaren Einrichtung des Empfängers und/oder auf der Zwischenstation oder einer programmierbaren Einrichtung der Zwischenstation, auszuführenden Teil des erfindungsgemäßen Computerprogramms speichert oder überträgt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Situation zur Veranschaulichung der erfindungsgemäßen Authentifizierung des Absenders einer Nachricht durch den Empfänger der Nachricht, wobei die Nachricht drahtlos über eine Zwischenstation übertragen wird.
- **Figur 2**: zeigt schematisch ein Ablaufdiagramm für ein erfindungsgemäßes Verfahren zum Authentifizieren des Absenders einer Nachricht durch den Empfänger der Nachricht, wobei die Nachricht drahtlos über eine Zwischenstation übertragen wird.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird, wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe erste, zweite, dritte und dergleichen in der Beschreibung und in den Ansprüchen zur Unterscheidung zwischen ähnlichen Elementen und nicht unbedingt zur Beschreibung einer sequenziellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

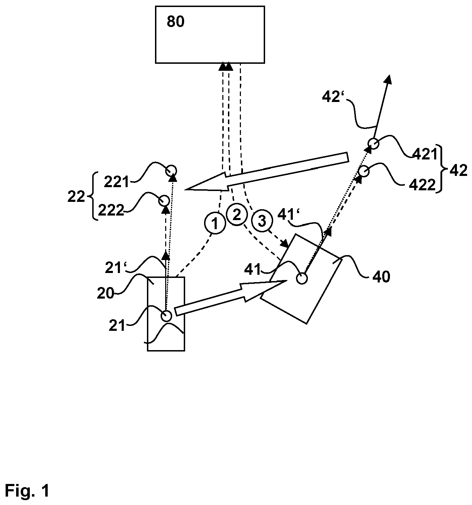

In Figur 1 ist schematisch eine Situation zur Veranschaulichung der erfindungsgemäßen Authentifizierung des Absenders 20 einer Nachricht durch den Empfänger 40 der Nachricht dargestellt, wobei die Nachricht drahtlos über eine Zwischenstation 80 übertragen wird, indem eine erste Teilnachricht 1 vom Absender 20 zur Zwischenstation 80 und eine zweite Teilnachricht 2 vom Empfänger 40 zur Zwischenstation 80 gesendet wird und eine dritte Teilnachricht 3 von der Zwischenstation 80 zum Empfänger 40 gesendet wird. Erfindungsgemäß ist sowohl der Absender 20 als auch der Empfänger 40 und die Zwischenstation 80 Teil eines Verkehrssystems, wobei insbesondere der Empfänger 40 der Nachricht ein teilautonom oder autonom gesteuertes, sich bewegendes Fahrzeug ist. Alternativ ist der Empfänger 40 ein stationäres Objekt. Sowohl der Absender 20 als auch der Empfänger 40 weisen zu unterschiedlichen Zeitpunkten potenziell unterschiedliche Positionen auf. Dies ist in Figur 1 für den Absender 20 für zwei verschiedene Positionen (bzw. Absenderpositionen) gezeigt, nämlich eine erste Absenderposition 21 und eine zweite Absenderposition 22. Für den Empfänger 40 ist dies ebenfalls für zwei verschiedene Positionen (bzw. Empfängerpositionen) gezeigt, nämlich eine erste Empfängerposition 41 und eine zweite Empfängerposition 42. Der Absender 20 weist an seiner ersten Absenderposition 21 die erste Absendergeschwindigkeit 21' auf (in Figur 1 dargestellt mittels eines durchgezogenen Pfeils). Der Empfänger 40 weist an seiner ersten Empfängerposition 41 die erste Empfängergeschwindigkeit 41' auf (in Figur 1 dargestellt mittels eines durchgezogenen Pfeils). Ferner weist der Empfänger 40 an seiner zweiten Empfängerposition 42 die zweite Empfängergeschwindigkeit 42' auf (in Figur 1 dargestellt mittels eines durchgezogenen Pfeils). Der Einfachheit halber wird im Rahmen der vorliegenden Beschreibung angenommen, dass zu einem ersten Zeitpunkt sich der Absender 20 an der ersten Absenderposition 21 und der Empfänger 40 sich an der ersten Empfängerposition 41 befindet. Ferner wird angenommen, dass zu einem nachfolgenden zweiten Zeitpunkt sich der Empfänger 40 an der zweiten Empfängerposition 42 (und die zweite Empfängergeschwindigkeit 42` aufweisend) befindet während sich der Absender 20 an der zweiten Absenderposition 22 befindet (an ihrer jeweiligen zweiten Position 22, 42 sind der Einfachheit halber weder Absender 20 noch Empfänger 40 nochmals dargestellt bzw. eingezeichnet). Erfindungsgemäß wird im ersten Zeitpunkt durch den Absender 20 die erste Absenderposition 21 bestimmt, beispielsweise mittels Positionssensoren und/oder unter Zuhilfenahme von Signalen eines globalen Satellitennavigationssystems und/oder von Signalen von Hilfseinrichtungen zur (genauen) Positionsbestimmung. Ferner wird im ersten Zeitpunkt durch den Absender 20 auch die erste Empfängerposition 41 bestimmt, wobei dies erfindungsgemäß insbesondere mittels eines Verfahrens zur Positionsdifferenzenermittlung zwischen Absender 20 und Empfänger 40 erfolgt, insbesondere mittels eines optischen oder elektrooptischen Verfahrens. Dies ist in Figur 1 mittels eines weißen, mit durchgezogener Linie umrandeten Pfeils dargestellt, der vom Absender 20 zum Empfänger 40 weist. Im Anschluss an die Positionsermittlung zum ersten Zeitpunkt wird die erste Teilnachricht 1 (vom Absender 20) zur Zwischenstation 80 gesendet; die erste Teilnachricht 1 umfasst hierbei wenigstens die erste Absenderposition 21 und die erste Empfängerposition 41. Zum zweiten Zeitpunkt wird durch den Empfänger 40 die zweite Empfängerposition 42 bestimmt, beispielsweise ebenfalls mittels Positionssensoren und/oder unter Zuhilfenahme von Signalen eines globalen Satellitennavigationssystems und/oder von Signalen von Hilfseinrichtungen zur (genauen) Positionsbestimmung. Ferner wird im zweiten Zeitpunkt durch den Empfänger 40 auch die zweite Absenderposition 22 bestimmt, wobei dies erfindungsgemäß insbesondere mittels eines Verfahrens zur Positionsdifferenzenermittlung zwischen Absender 20 und Empfänger 40 erfolgt, insbesondere mittels eines optischen oder elektrooptischen Verfahrens. Dies ist in Figur 1 mittels eines weißen, mit durchgezogener Linie umrandeten Pfeils dargestellt, der vom Empfänger 40 zum Absender 20 weist. Im Anschluss an die Positionsermittlung zum zweiten Zeitpunkt wird die zweite Teilnachricht 2 (vom Empfänger 40) zur Zwischenstation 80 gesendet; die zweite Teilnachricht 2 umfasst hierbei wenigstens die zweite Empfängerposition 42, die zweite Empfängergeschwindigkeit 42` und die zweite Absenderposition 22. Aus den Positions- und Geschwindigkeitsinformationen zum ersten Zeitpunkt kann durch Extrapolation (und sofern der zeitliche Unterschied zwischen dem ersten und zweiten Zeitpunkt nicht übergroß ist) auf wenigstens die Positionsinformationen zum zweiten Zeitpunkt geschlossen werden und umgekehrt kann aus den Positions- und Geschwindigkeitsinformationen zum zweiten Zeitpunkt durch Extrapolation zurück zum ersten Zeitpunkt (ebenfalls unter der Annahme, dass der zeitliche Unterschied zwischen dem ersten und zweiten Zeitpunkt nicht übergroß ist) auf wenigstens die Positionsinformationen zum ersten Zeitpunkt geschlossen werden; allerdings ergeben sich hierbei zwingend Abweichungen, die in Figur 1 dahingehend dargestellt sind, dass die jeweils zweiten Positionen 22, 42 von Absender 20 und Empfänger 40 mittels weiteren, durch Extrapolation ermittelten bzw. berechneten oder aber gemessenen Positionen ergänzt werden. Diese weiteren Positionen sind für die zweite Absenderposition 22 mit den Bezugszeichen 221 und 222 in Figur 1 angegeben, während sie für die zweite Empfängerposition 42 mit den Bezugszeichen 421 und 422 angegeben sind. Durch die Zwischenstation 80 wird erfindungsgemäß aus der (durch den Absender 20 gemessenen) ersten Empfängerposition 41, der (durch den Empfänger 40 gemessenen bzw. bestimmten) zweiten Empfängergeschwindigkeit 42` und der (durch den Empfänger 40 gemessenen bzw. bestimmten) zweiten Empfängerposition 42 eine erste Positionsabweichung hinsichtlich des Empfängers 40 und aus der (durch den Absender gemessenen bzw. bestimmten) ersten Absenderposition 21 und der (durch den Empfänger 40 gemessenen) zweiten Absenderposition 22 eine zweite Positionsabweichung hinsichtlich des Absenders 20 bestimmt. Sofern die erste und zweite Positionsabweichung kleiner sind als ein vorgegebener Maximalwert, wird der Absender 20 der Nachricht authentifiziert und es wird die entsprechende dritte Teilnachricht zum Empfänger 40 gesendet.
Sowohl der Empfänger 40 als auch der Absender 20 und die Zwischenstation 80 sind erfindungsgemäß insbesondere Teil eines Telekommunikationsnetzes oder verbunden mit einem Telekommunikationsnetz (bzw. der Absender 20 ist Teil eines ersten Telekommunikationsnetzes und der Empfänger 40 ist Teil eines zweiten Telekommunikationsnetzes und ggf. ist die Zwischenstation 80 Teil eines dritten Telekommunikationsnetzes), wobei das Telekommunikationsnetz bzw. die Telekommunikationsnetze jedoch nicht in Figur 1 dargestellt sind. Über das Telekommunikationsnetz oder die Telekommunikationsnetze ist sowohl der Absender 20 als auch der Empfänger 40 mit der Zwischenstation 80 verbunden oder verbindbar bzw. diese können Nachrichten austauschen. Erfindungsgemäß existiert die Zwischenstation 80 als eine Zentralstelle (nachfolgend auch als ZE bezeichnet), die mit allen AFZG und AINS kabellos via extrem schneller/leistungsfähiger Zellularnetze, z.B. 5G etc., verbunden ist und die die Stammdaten der Teilnehmer bzw. von Absender 20 und Empfänger 40 (z.B. Fahrzeug oder statische Einheit) umfasst bzw. die über die Zwischenstation abrufbar bzw. zugreifbar sind. Diese Stammdaten umfassen insbesondere:
-- Zertifikate,
-- optische FZG Merkmale,
-- Fahrzeugkennzeichen,
-- Fahrzeugtyp und Fahrzeugmaße (Länge, Breite, Höhe),
-- Definition der Lage der Eigenposition (z.B. Lage GPS Empfänger) relativ zum Fahrzeug,
-- eine eindeutige ID (Kommunikationsadresse/-nummer) zur Festlegung der Identität im Zellularnetz z.B. 5G IMSI bzw. MSISDN,
-- den aktuellen Status (z.B. die zuletzt übermittelte Position) des AFZG (oder optional auch des AINS),
-- erlaubte Nachrichten/Befehle für Services, z.B. Service X (ein Service kann ein reiner Nachrichten Service sein, aber auch eine auszuführende Aktion des AFZG beinhalten). Die ZE (d.h. die Zwischenstation 80) verwaltet erfindungsgemäß insbesondere auch Zertifikate und führt Berechnungen durch. Es wird vorausgesetzt, dass die AINS (d.h. der Absender 20) mit einem AFZG (d.h. einem Empfänger 40) über Mobilfunk Kontakt erfindungsgemäß insbesondere ausschließlich via der ZE (d.h. der Zwischenstation 80) aufnimmt oder aufnehmen kann - insbesondere auch um eine möglichst störungssichere, vertrauenswürdige und verschlüsselte Kommunikation zwischen dem Absender 20 und dem Empfänger 40 über die Zwischenstation 80 (gegenüber einer Punkt-zu-Punkt Kurzreichweitenverbindung direkt zwischen dem Absender 20 und dem Empfänger 40, etwa über BLE, Bluetooth Low Energy, WLAN, etc.) zu ermöglichen.

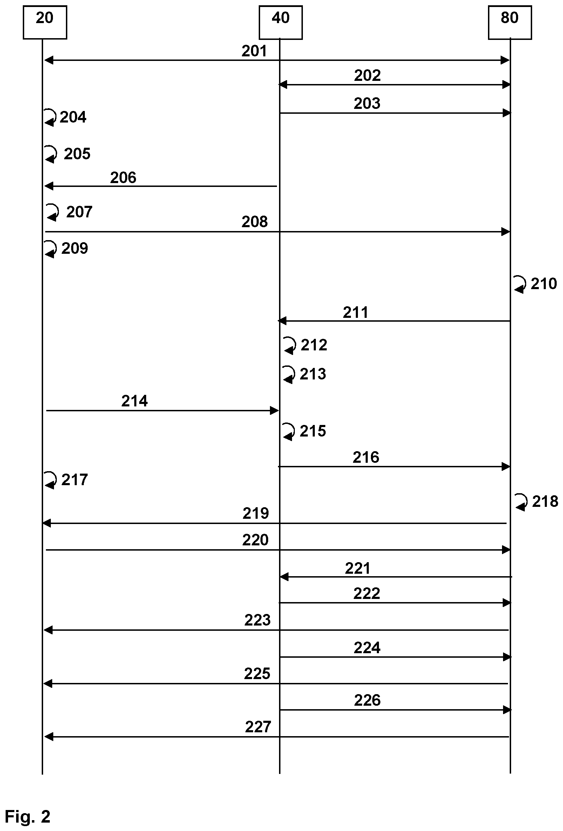

In Figur 2 ist schematisch und exemplarisch ein Ablaufdiagramm für ein erfindungsgemäßes Verfahren zum Authentifizieren des Absenders einer Nachricht durch den Empfänger der Nachricht dargestellt, wobei die Nachricht drahtlos über eine Zwischenstation übertragen wird.

In einem ersten und zweiten Prozessschritt 201, 202 findet eine Stammdatenerfassung statt: Im ersten Prozessschritt 201 werden die Stammdaten des AINS bzw. des Absenders 20 erfasst und durch die ZE bzw. Zwischenstation 80 registriert. Im zweiten Prozessschritt 202 werden die Stammdaten des AFZG bzw. des Empfängers 40 erfasst und durch die ZE bzw. Zwischenstation 80 registriert. Ein dritter Prozessschritt 203 stellt eine periodische Übertragung von Daten des Empfängers 40 zur Zwischenstation 80 dar: Im dritten Prozessschritt 203 findet etwa zu einem Zeitpunkt t₀ eine solche (sich insbesondere periodisch wiederholende) Datenübertragung statt, insbesondere zur Übertragung der aktuellen Position des Empfängers 40 (zum Zeitpunkt t₀) und etwa der Signatur des Empfängers 40.

In einem vierten Prozessschritt 204, einem fünften Prozessschritt 205, einem sechsten Prozessschritt 206, einem siebten Prozessschritt 207, einem achten Prozessschritt 208 und einem neunten Prozessschritt 209 wird die Datenerfassung und - Übermittlung durch den Absender 20 / AINS durchgeführt, was im Wesentlichen dem ersten Schritt des erfindungsgemäßen Verfahrens entspricht: Im vierten Prozessschritt 204 wird ein Trigger für einen bestimmten Dienst (etwa "Service X") bei einem Empfänger 40 / AFZG in der optischen Nähe des Absenders 20 gesetzt; insbesondere ist es optional möglich, dass die Geschwindigkeit des Absenders gesteuert oder angepasst wird, sofern dies möglich ist. Gemäß einer ersten solchen optionalen Ausführungsform findet hierbei eine Anpassung der Geschwindigkeit des Absenders 20 an die Geschwindigkeit des Empfängers 40 statt (d.h. "folge einem bestimmten Fahrzeug - d.h. dem Empfänger 40 bzw. AFZG - möglichst auf einer Geradeaus-Spur), so dass, wenigstens im ersten Zeitpunkt, jedoch bevorzugt sowohl im ersten Zeitpunkt t₁ als auch im zweiten Zeitpunkt t₂, beide Geschwindigkeiten (d.h. des Absenders 20 als auch des Empfängers 40) möglichst sowohl vom Betrag her als auch von der Richtung her im Wesentlichen gleich sind. Gemäß einer zweiten solchen optionalen Ausführungsform findet hierbei eine Anpassung der Geschwindigkeit des Absenders 20 an die Geschwindigkeit des Empfängers 40 statt, so dass im ersten Zeitpunkt t₁ beide Geschwindigkeiten (d.h. des Absenders 20 als auch des Empfängers 40) möglichst sowohl vom Betrag her als auch von der Richtung her im Wesentlichen gleich sind und die Geschwindigkeit des Absenders 20 im wesentlichen konstant (jedenfalls im Zeitintervall zwischen dem ersten Zeitpunkt t₁ und dem zweiten Zeitpunkt t₂) bleibt. Im fünften Prozessschritt 205 wird zum ersten Zeitpunkt t₁ durch den Absender 20 die erste Absenderposition 21 und optional die erste Absendergeschwindigkeit 21' bestimmt. Im sechsten Prozessschritt 206 wird durch den Absender 20 der Differenzvektor zum Empfänger 40 bestimmt (mittels welchem die erste Empfängerposition 41, d.h. die Position des Empfängers 40 zum ersten Zeitpunkt t₁, bestimmbar ist). Insbesondere werden im sechsten Prozessschritt 206 optional (zusätzlich zur Ermittlung der Positionsdifferenzen zwischen Absender 20 und Empfänger 40) auch optische Merkmale oder optische Fahrzeugmerkmale des Empfängers 40, insbesondere mittels eines optischen oder elektrooptischen Verfahrens, ermittelt oder bestimmt oder erkannt. Im siebten Prozessschritt 207 wird - insbesondere durch polares Anhängen des Differenzvektors zwischen Absender 20 und Empfänger 40 - die erste Empfängerposition 41 bestimmt und im achten Prozessschritt 208 wird die erste Teilnachricht zur Zwischenstation 80 gesendet, wobei die erste Teilnachricht jedenfalls die erste Absenderposition 21 und die erste Empfängerposition 41, ggf. zusätzlich auch die erste Absendergeschwindigkeit 21', umfasst. Im neunten Prozessschritt 209 wird die Anpassung der Geschwindigkeit des Absenders 20 an die Geschwindigkeit des Empfängers 40 oder die Beibehaltung der Geschwindigkeit des Absenders 20 im ersten Zeitpunkt t₁ möglichst sowohl bis zum zweiten Zeitpunkt t₂ beibehalten als auch möglichst darüber hinaus während eines vorgegebenen Zeitintervalls A (wobei gilt A > t₂ - t₁) beibehalten.

In einem zehnten Prozessschritt 210 und einem elften Prozessschritt 211 wird die Authentisierung des Absenders 20 (d.h. des AINS), die Autorisierung und eine Plausibilitätsprüfung durchgeführt: Im zehnten Prozessschritt 210 der Absender 20 authentisiert und geprüft, ob die Berechtigung des Absenders 20 für den bestimmten Dienst (etwa "Service X") beim Empfänger 40 vorliegt. Ferner wird die Plausibilität geprüft, dass der Absender 20 tatsächlich der Absender bzw. die Entität ist, die er vorgibt zu sein und es wird geprüft, ob es plausibel ist, dass der Absender 20 dem Empfänger 40 die Nachricht übermittelt, d.h. ob sowohl Absender 20 als auch Empfänger 40 einer vorgegebenen räumlichen Mindestnähe zueinander positioniert sind. Ferner wird im zehnten Prozessschritt 210 geprüft, ob die erste Empfängerposition 41 (d.h. zum ersten Zeitpunkt t₁) angesichts der Position des Empfängers zum Zeitpunkt t₀ (vgl. den dritten Prozessschritt 203) plausibel ist (d.h. ob die vom Empfänger zwischen t₀ und t₁ zurückgelegte Strecke plausibel ist). Im elften Prozessschritt 211 wird die Information von der Zwischenstation 80 zum Empfänger 40 übertragen, dass der bestimmte Dienst (etwa "Service X") durch den Absender 20 angefordert und autorisiert ist; dies wird insbesondere durch Übermittlung einer Signaturinformation der Zwischenstation 80 zum Empfänger 40 authentisiert.

In einem zwölften Prozessschritt 212, einem dreizehnten Prozessschritt 213, einem vierzehnten Prozessschritt 214, einem fünfzehnten Prozessschritt 215, sechzehnten Prozessschritt 216 und siebzehnten Prozessschritt 217 wird eine Authentisierung der Zwischenstation 80 sowie eine Datenerfassung und -übermittlung durch den Empfänger 40 durchgeführt, was im Wesentlichen dem zweiten Schritt des erfindungsgemäßen Verfahrens entspricht: Im zwölften Prozessschritt 212 wird die Zwischenstation 80 (bzw. die ZE) authentisiert (insbesondere anhand der im elften Prozessschritt 211 übertragenen Signaturinformation der Zwischenstation 80). Im dreizehnten Prozessschritt 213 wird zum zweiten Zeitpunkt t₂ durch den Empfänger 40 die zweite Empfängerposition 42 und die zweite Empfängergeschwindigkeit 42' bestimmt. Im vierzehnten Prozessschritt 214 wird durch den Empfänger 40 der Differenzvektor zum Absender 20 bestimmt (mittels welchem die zweite Absenderposition 22, d.h. die Position des Absenders 20 zum zweiten Zeitpunkt t₂, bestimmbar ist). Insbesondere werden im vierzehnten Prozessschritt 214 optional (zusätzlich zur Ermittlung der Positionsdifferenzen zwischen Absender 20 und Empfänger 40) auch optische Merkmale oder optische Fahrzeugmerkmale des Absenders 20, insbesondere mittels eines optischen oder elektrooptischen Verfahrens, ermittelt oder bestimmt oder erkannt. Im fünfzehnten Prozessschritt 215 wird - insbesondere durch polares Anhängen des Differenzvektors zwischen Empfänger 40 und Absender 20 - die zweite Absenderposition 22 bestimmt und im sechzehnten Prozessschritt 216 wird die zweite Teilnachricht zur Zwischenstation 80 gesendet, wobei die zweite Teilnachricht jedenfalls die zweite Empfängerposition 42, die zweite Empfängergeschwindigkeit 42` und die zweite Absenderposition 22 und insbesondere zusätzlich auch die ermittelten optischen Merkmale oder optische Fahrzeugmerkmale des Absenders 20 sowie eine Signaturinformation des Empfängers 40 umfasst. Im siebzehnten Prozessschritt 217 wird die Anpassung der Geschwindigkeit des Absenders 20 an die Geschwindigkeit des Empfängers 40 beendet.

In einem achtzehnten Prozessschritt 218 bis zu einem siebenundzwanzigsten Prozessschritt 227 wird die Authentisierung des Empfängers 40 durchgeführt und verschiedene Berechnungen, die zur Authentisierung auch des Absenders 20 führen, durchgeführt, was im Wesentlichen dem dritten Schritt des erfindungsgemäßen Verfahrens entspricht (wobei die nach dem achtzehnten Prozessschritt 218 eingezeichneten Prozessschritte (bzw. zusätzlichen Nachrichten) für das Zeitintervall t₂-t₁ und die Epsilon-f-Berechnung nicht mehr benötigt werden, sondern nur den Gesamtablauf auch inkl. der nur optionalen Anteile komplettieren): Im achtzehnten Prozessschritt 218 wird die Authentisierung des Empfängers 40 durchgeführt, insbesondere anhand der Signaturinformation des Empfängers 40; optional werden die ermittelten optischen Merkmale oder optische Fahrzeugmerkmale des Absenders 20 und/oder des Empfängers 40 geprüft. Ferner wird die Zeitdifferenz zwischen t₁ und t₂ bestimmt. Weiterhin wird die Differenz zwischen der gemessenen und der berechneten Position des Empfängers 40 bestimmt: Hierzu wird die erste Empfängerposition 41 sowie die zweite Empfängergeschwindigkeit 42' (multipliziert mit dem Zeitintervall t₂ - t₁) (als berechnete zweite Empfängerposition) mit der zweiten Empfängerposition 42 verglichen und die erste Positionsabweichung (nachfolgend auch als Epsilon-1 bezeichnet) berechnet. Weiterhin wird die Differenz zwischen der gemessenen und der berechneten Position des Absenders 20 bestimmt: Hierzu wird die zweite Absenderposition 22 sowie die erste Absendergeschwindigkeit 21' (multipliziert mit dem Zeitintervall t₂ - t₁) (als berechnete erste Absenderposition) mit der ersten Absenderposition 21 verglichen und die zweite Positionsabweichung (nachfolgend auch als Epsilon-2 bezeichnet) berechnet. Es wird ferner eine finale, durch Doppelmessung verbesserte Differenz (nachfolgend auch als Epsilon-f bezeichnet) bestimmt, wobei Epsilon-f dem Betrag des arithmetischen Mittels von Epsilon-1 und Epsilon-2 entspricht, ggf. zuzüglich eines Funktionswerts, der abhängig ist vom Zeitintervall t₂ - t₁ und von der Differenz der Geschwindigkeiten des Absenders 20 und des Empfängers 40 bzw. zum ersten bzw. zweiten Zeitpunkt. Es wird insbesondere sodann geprüft, ob die mittlere Differenz von Epsilon-f in einem Toleranzbereich T liegt, wobei der Toleranzbereich T insbesondere als ein vorgegebener Toleranzbereich vorgesehen ist. Im neunzehnten Prozessschritt 219 wird - sofern die erste und zweite Positionsabweichung (Epsilon-1 und Epsilon-2) bzw. Epsilon-f kleiner sind/ist als ein vorgegebener Maximalwert bzw. innerhalb des Toleranzbereichs T liegteine Information zum Absender 20 übertragen, wonach die durchzuführenden Prüfungen erfolgreich verlaufen sind und es wird angefragt, ob der bestimmte Dienst (etwa "Service X") für den Empfänger 40 ausgeführt werden soll. Im zwanzigsten Prozessschritt 220 wird dies seitens des Absenders 20 zur Zwischenstation 80 bestätigt. Im einundzwanzigsten Prozessschritt 221 wird von der Zwischenstation 80 an den Empfänger 40 die Information übertragen, den bestimmten Dienst (etwa "Service X") durch den Empfänger 40 auszuführen, was dieser im zweiundzwanzigsten Prozessschritt 222 bestätigt. Der einundzwanzigste Prozessschritt 221 entspricht (insbesondere zusammen mit dem elften Prozessschritt 211) im Wesentlichen der Übertragung der dritten Teilnachricht zum Empfänger, d.h. es wird zum Empfänger 40 die Information übertragen, welcher Dienst, welcher Service oder welcher Befehl (auf Anfrage bzw. Befehl des Absenders 20) durch den Empfänger 40 ausgeführt werden soll und dass der Absender 20 authentifiziert bzw. berechtigt ist, diese Anforderung zu stellen. Im dreiundzwanzigsten Prozessschritt 223 wird die Information über die erhaltene Empfangsbestätigung von der Zwischenstation 80 zum Absender 20 übertragen. Im vierundzwanzigsten Prozessschritt 224 wird der bestimmte Dienst (bzw. der "Service X") durch den Empfänger 40 initiiert und im fünfundzwanzigsten Prozessschritt 225 dies an den Absender 20 (durch die Zwischenstation 80) kommuniziert. Im sechsundzwanzigsten Prozessschritt 226 wird der bestimmte Dienst (bzw. der "Service X") durch den Empfänger 40 beendet und im siebenundzwanzigsten Prozessschritt 227 dies an den Absender 20 (durch die Zwischenstation 80) kommuniziert.

Es ist erfindungsgemäß insbesondere vorgesehen, dass eine Verschlüsselung der (von dem Absender 20 zum Empfänger 40 zu übertragenden) Nachricht einem extrem hohen Sicherheitsstandard folgt und dass diese Verschlüsselung aufgrund der kurzen Zeitabstände (im maximal 200ms Bereich zwischen beispielsweise t₁ und t₂) zwischen Start der Verschlüsselung und Reaktion auf den Nachrichteninhalt im Empfänger 40 zwar theoretisch gestört und entschlüsselt werden kann, dass aber der Empfänger 40 dieses bemerkt und was wesentlicher ist, dass eine Nachricht nicht zeitgerecht innerhalb von 200ms verfälscht werden kann und zugleich dem Empfänger 40 als authentisch vorgespielt werden kann. Somit ist es erfindungsgemäß vorteilhaft möglich, dass - sofern die Nachricht den Empfänger 40 erreicht - der Empfänger 40 bzw. der Absender 20 absolut sicher authentifiziert werden kann und wenn dieses erfolgt ist, die Nachricht dann auch als unverfälscht gelten kann. Diese Eigenschaft (bzw. dieser sichere Prozessbaustein) weisen herkömmlicherweise bekannte Verfahren z.B. für Anwendungen im Bereich des autonomen Fahrens nicht auf. Gemäß der vorliegenden Erfindung wird somit eine praktikable Realisierung bereitgestellt, wie insbesondere eine mobile oder statische Autorität, AINS (z.B. ein Verkehrspolizei-FZG oder eine Mautstelle als Autoritäts-Instanz), d.h. ein Absender 20, einem potenziell autonom oder teil-autonom betriebenen AFZG bzw. Empfänger 40 eine absolut sicher authentifizierbare Nachricht zu senden in der Lage ist. Die notwendige extrem hohe Vertrauenswürdigkeit des Nachrichtabsenders 20 und damit indirekt auch des Nachrichteninhaltes, z.B. X-2-Car oder auch Car-2-Car, ist insb. dann zu gewährleisten, wenn die Nachricht beim empfangenden Fahrzeug automatisiert durch die autonome Fahrzeugsteuerung einen Eingriff in die Fahrsteuerung bewirken soll. Als Beispiel sei hier etwa der Befehl genannt, mit dem ein Fahrzeug auf den nächsten Parkplatz geleitet werden soll, um es und den "Fahrer" dort im Stand kontrollieren zu können. Dieser Befehl könnte die Nachricht (bzw. der Nachrichteninhalt) aus einem mobilen Polizeifahrzeug (als AINS bzw. als Absender 20) an ein anderes autonom fahrendes Fahrzeug (AFZG bzw. Empfänger 40) in Sichtweite sein. "In Sichtweite" ist hier und beim Verfahren gemäß der vorliegenden Erfindung insofern von Bedeutung, da das erfindungsgemäße Verfahren insbesondere die elektro-optische Erkennung des einen Teilnehmer Fahrzeugs (d.h. des Empfängers 40) durch das andere Fahrzeug (d.h. des Absenders 20) - und umgekehrt - bezieht, die auch freie Sicht bezüglich der Erfassungsmethode des polaren Anhängens auf dem Detektionsweg voraussetzt. Erfindungsgemäß sind jedoch darüber hinaus auch andere Nachrichten (bzw. andere Arten von Nachrichten) interessant, die nicht sofort und automatisiert eine geänderte Fahrzeugsteuerung bewirken; als Beispiel sei hier die Nachricht mit dem Inhalt genannt, dass an einer Stelle ein Hindernis zu erwarten ist oder die Nachricht, dass in Fahrrichtung mit Stau oder einem Falschfahrer zu rechnen ist. Prinzipiell können erfindungsgemäß alle Teilnehmer, AINS und AFZG, d.h. Absender 20 und Empfänger 40, statisch (d.h. unbeweglich) und/oder kinematisch (d.h. beweglich) sein.

Erfindungsgemäß ist es in der Regel so, dass ein autonom oder teil-autonom fahrendes Fahrzeug, AFZG, bzw. der Empfänger 40 eine äußerst exakte Kenntnis über seine Position, Geschwindigkeit und Fortbewegungsrichtung hat; diese Parameter können aktuell in der Regel alle ca. 10ms (100Hz interne Fahrzeugloop zur Steuerungsänderung) Änderungen in der Fahrtrichtung und/oder Geschwindigkeit anpassen. Die Entscheidungen zu diesen Änderungen basieren aktuell auf den etwas langsameren Auswertezyklen von bestenfalls ca. 20ms (50Hz Datenerhebungsfrequenz aller Sensoren inkl. deren Auswertung, z. B. der LIDAR Datenerfassung inkl. Auswertung). In einem autonomen Fahrzeug eingesetzte Sensoren können beispielsweise Kameras, Radarsensoren, Ultraschallsensoren oder Laserscanner (LIDAR), sowie Sensoren zur Messung einer Raddrehzahl, einer Gierrate oder einer Längs- und/oder Querbeschleunigung umfassen. Ferner sind typischerweise Sensoren zur Eigenlokalisierung, wie zum Beispiel ein GPS-Empfänger vorgesehen. Auch kann die Positionsdifferenz zu gesichteten Objekten durch polares Anhängen (d.h. Zielposition = Standpunktposition (bzw. die Ausgangsposition) + Richtung*Abstand) ermittelt werden. Auch die Umweltobjekte, z.B. das Nachbarfahrzeug, können in der Regel wenigstens alle 20ms positionsmäßig relativ und absolut ermittelt werden. Außerdem hat es eine ständige Funkverbindung zu einer Zentraleinheit ZE, d.h. zur Zwischenstation 80, mit sehr hoher Qualität, beispielsweise mit einer Latenzzeit von ca. 1-2ms etwa in 5G Netzen. Erfindungsgemäß gilt für den Absender 20, d.h. die AINS, der dem Empfänger 40 bzw. AFZG eine Nachricht senden will, das Gleiche. Die Zentralstelle 80 ist im Wesentlichen mit Fahrzeugen bzw. Absendern 20 bzw. Empfängern 40 (AFZG und AINS) kabellos via schneller/leistungsfähiger Zellularnetze, z.B. 5G etc., verbunden und umfasst typischerweise die Stammdaten der Teilnehmer (z.B. der Fahrzeuge bzw. der statischen Einheiten) wie etwa Zertifikate, optische Fahrzeugmerkmale, Fahrzeugkennzeichen, Fahrzeugtyp und Fahrzeugmaße, die Definition der Lage der Eigenposition relativ zum Fahrzeug, eine eindeutige Identifikationsinformation zur Festlegung der Identität im Zellularnetz z.B. 5G IMSI bzw. MSISDN, den aktuellen Status, erlaubte Nachrichten/Befehle für Services, z.B. Service X (ein Service kann ein reiner Nachrichtenservice sein (d.h. muss in AFZG nicht sofort automatisch eine Aktion zur Änderung des Geschwindigkeitsvektors bedingen), aber auch eine auszuführende Aktion des Empfängers 40 bzw. AFZG beinhalten).

Erfindungsgemäß ist es vorgesehen, dass sich beide Teilnehmer, d.h. Absender 20 und Empfänger 40 (d.h. AINS und AFZG), in elektrooptisch-verifizierbarer Nähe zueinander befinden (z.B. über Kamera basierte optische Nummernschilderkennung (aktuell bis zu 300m Distanz) und Laser-basierte Typerkennung (aktuell bis 250m Distanz) oder eine Ortsbestimmung des Zieles durch polares Anhängen an die ermittelte Standpunktposition (aktuell möglich in einem Radius von ungefähr 250-300m, je nach System)). Mit diesen Daten (insb. der Nummernschilderkennung) kann von der ZE eine eindeutige Kommunikationsadresse angefragt und über Positionsdifferenzen verifiziert werden. Alle Teilnehmer können die absolute Zeit, z.B. durch die GPS-Zeit, hochgenau auf weniger als eine Millisekunde bestimmen. Alle Teilnehmer beziehen ihre Positionen und Geschwindigkeiten auf ein einheitliches Koordinatensystem. Erfindungsgemäß bietet sich die Nutzung des Potentials eines 5G Mobilfunknetzes und der Potentiale von LTE-V und des WLAN Netzes pWLAN (IST-G5) an - als Beispiele für schnelle Datenübertragungen mit geringer Latenzzeit von insbesondere kleiner als 5 ms bis hin zu 1-2ms. Allerdings ist die vorliegende Erfindung auch umsetzbar in oder mit Mobilfunknetzen basierend etwa auf dem 4G-Standard, insbesondere dann, wenn gewisse Annahmen bzgl. der Bewegungen der Objekte, d.h. von Absender 20 und Empfänger 40, AINS und AFZG, zueinander eingehalten werden, was erfindungsgemäß insbesondere dadurch realisiert werden kann, dass die Geschwindigkeitsdifferenz zwischen Absender 20 und Empfänger 40 bei annähernd gleicher Fahrtrichtung kleiner als oder gleich 50 km/h ist, bevorzugt kleiner als oder gleich 25 km/h, weiter bevorzugt kleiner als oder gleich 10 km/h, weiter bevorzugt kleiner als oder gleich 5 km/h. Erfindungsgemäß kann sowohl der Absender 20 als auch der Empfänger 40 und die Zwischenstation 80 (d.h. jede Instanz) sehr schnell bzw. innerhalb sehr kurzer Zeitintervalle die Kommunikation steuern und eine Nachricht übermitteln (wobei es die Übermittlung der Nachricht einschließt, den Inhalt zu berechnen, das Ver- und Entschlüsseln, sowie das Parsen im Empfänger) - bei der Verwendung von 5G Netzen ist dies insbesondere mit ca. 2ms (500Hz) für die Kommunikationssteuerung und mit ca. 20ms für die Nachrichtübermittlung möglich; hierzu umfassen Absender 20, Empfänger 40 und Zwischenstation 80, ZE, AINS und AFZG, über ausreichend leistungsfähige Prozessoren, Speicher und Kommunikationseinrichtungen. Erfindungsgemäß werden (insbesondere neben den Techniken der Absicherung einer Kommunikation mit Zertifikaten und Verschlüsselungsverfahren) zwei neue Elemente zu einer verbesserten Authentisierung des Absenders 20 einer Nachricht integriert: Die Naherkennung, d.h. die Verwendung des 3D-Abstands zwischen dem Empfänger 40 und dem Absender 20, AFZG und AINS (typischerweise begrenzt auf die Reichweiten von maximal einigen 100 Metern, aktuell 250-300m, der elektrooptischen on-board Systeme der Teilnehmer) ermöglicht zum einen die Naherkennung von Merkmalen der jeweils anderen Instanz bzw. des anderen Teilnehmers (insbesondere Fahrzeugmerkmale) und zum anderen die Position der jeweils anderen Instanz (insbesondere die Fahrzeugposition). Somit ist es erfindungsgemäß vorteilhaft möglich diese Elemente zur Absicherung der Authentifizierung des Senders heranzuziehen.
Durch die Ermittlung sich gegenseitig kontrollierender Positionsdifferenzen zu unterschiedlichen 2 Zeitpunkten t₁ (t=t,: Messzeitpunkt durch den Absender 20, AINS) und t₂ (t=t₂: Messzeitpunkt durch den Empfänger 40, AFZG) und initiiert durch unterschiedliche Teilnehmer, AINS und AFZG, ist es erfindungsgemäß möglich, eine geometrische Größe Epsilon-f zu definieren und zu berechnen. Erfindungsgemäß wird zum Zeitpunkt t₁ der Vektor Epsilon-1 und zu t₂ der Vektor Epsilon-2 ermittelt, die sich gegenseitig kontrollieren auch wenn von t₁ bis t₂ die Geschwindigkeitsvektoren von Sender 20, AINS, und Empfänger 40, AFZG, nicht konstant sind und auch nicht ausreichend identisch sind.
Bei vergleichsweise geringen Unterschieden der momentanen Geschwindigkeit von Absender 20 und Empfänger 40 während dt=t₂ - t₁ (d.h. der GeschwindigkeitsDifferenzvektor dv=v₂-v₁ ist kleiner als eine vorgegebener Geschwindigkeitsdifferenzgrenzwert und bei vergleichsweise kleiner Zeitspanne dt (d.h. dem Zeitintervall zwischen t₁ und t₂) werden die Absolutbeträge von Epsilon-1 und Epsilon-2 annähernd gleich groß oder sogar ausreichend genau Null sein. Bei gleich genauen Bestimmungen der Ziel Koordinate beim polaren Anhängen zur Bestimmung von Epsilon-1 oder Epsilon-2 folgt ausreichend genau Epsilon-1 = Epsilon-2 und bei der Mittelbildung (Epsilon-f = (Epsilon-1 + Epsilon-2)/2) wird der Bestimmungsfehler sigma Epsilon-f (d.h. die Standardabweichung von Epsilon-f) von Epsilon-f statistisch gesehen dann ca. 29% geringer als der von einem der Epsilon-1 oder Epsilon-2 sein. Da im Verfahren der Erfindung immer beide Größen Epsilon-1 und Epsilon-2 ermittelt werden, kann man zur Verbesserung der Genauigkeit eines Hypothesentests die abgeleitete Größe Epsilon-f verwenden. Epsilon-f beruht darauf, dass zu t₁ (beim Absender 20 bzw. aus AINS heraus) und später zu t₂ (beim Empfänger 40 bzw. aus AFZG heraus) mittels polaren Anhängens die jeweilige Differenz (Epsilon-1 bzw. Epsilon-2) zwischen der gemessenen und der berechneten Position der jeweils anderen Instanz bestimmt wird (die erste Empfängerposition 41 sowie die zweite Empfängergeschwindigkeit 42' (multipliziert mit dem Zeitintervall t₂ - t₁) wird als berechnete zweite Empfängerposition mit der zweiten Empfängerposition 42 verglichen, was die erste Positionsabweichung bzw. Epsilon-1 ergibt und die zweite Absenderposition 22 sowie die erste Absendergeschwindigkeit 21' (multipliziert mit dem Zeitintervall t₂ - t₁) wird als berechnete erste Absenderposition mit der ersten Absenderposition 21 verglichen, was die zweite Positionsabweichung bzw. Epsilon-2 ergibt). Die berechneten Positionen sind lediglich Annäherungen bzw. Abschätzungen an den eigentlich zu bestimmenden Vektor. Die erste und zweite Positionsabweichung (Epsilon-1 bzw. Epsilon-2) sind jeweils ein Maß für die Abweichung des Richtungsvektors zwischen den Bestimmungen zu unterschiedlichen Zeitpunkten in AINS und AFZG (Absender 20 und Empfänger 40), womit die Änderung des Richtungsvektors zwischen AINS und AFZG (Absender 20 und Empfänger 40) im Zeitraum dt=t₂ - t₁ geprüft werden kann. Wenn somit diese beiden Richtungsvektoren aus Koordinatendifferenzen (ggf. bis auf das Vorzeichen) identisch sind, dann hat A nach B geschaut, B erkannt, und B aufgefordert auch A zu erkennen (wobei A dem Absender 20 und B dem Empfänger 40 entspricht). Dieses Erkennen wird mittels Vergleich des identischen Richtungsvektors (Koordinatendifferenz zwischen A und B also Positionsdifferenzen) den A vorher auch schon bestimmt hatte, erreicht, allerdings mit anderen Messgrößen und zu einer anderen Zeit und mit anderen Extrapolationsannahmen, die aber ausreichend sicher sind, da die Zeitdifferent zwischen t₁ und t₂, d.h. dt=t₂ - t₁ wegen der Nutzung insbesondere von vergleichsweise schnellen Kommunikationsnetzen (insbesondere 5G-Netze) als sehr klein angenommen werden kann. Durch die Ermittlungen sich gegenseitig kontrollierender Positionsdifferenzen zu unterschiedlichen zwei Zeitpunkten t₁ (t=t₁ Messzeitpunkt durch AINS) und t₂ (t=t₂ Messzeitpunkt durch AFZG) und initiiert durch unterschiedliche Teilnehmer, AINS und AFZG, kann somit die geometrische Größe Epsilon-f in der Zwischenstation 80 berechnet werden. Wenn diese Größe kleiner als ein vorgegebener Grenzwert T ist, besagt dies, dass kein anderer (Verkehrs-)Teilnehmer als der Absender 20 (AINS) die Nachricht (bzw. die X-2-Car Nachricht) gesendet haben kann, da ein solcher "andere" Teilnehmer dann an der Position des Absenders 20 (AINS) sich hätte befinden müssen, was aber durch den Test mit Epsilon-f als nicht möglich ermittelt wurde. Somit wird erfindungsgemäß das Authentifizieren des Absenders 20 der Nachricht durch den Empfänger 40 verbessert. Die Datenerhebung für alle Inputgrößen für Epsilon-f erfolgt innerhalb des extrem kurzen Zeitraums dt=t₂-t₁. Entsprechendes bzgl. Authentifizierung gilt für den Empfänger 40 (AFZG), als nicht austauschbarem Empfänger 40 an seiner ermittelten Position. Erfindungsgemäß ist es somit vorteilhaft möglich: Sofern sowohl der Absender 20 als auch der Empfänger 40 (AINS und AFZG) im Wesentlichen gleich gute on-board Sensoren zur Ermittlung von Positionen ihrer eigenen Objekte und ihrer Zielobjekte haben, werden die 3D-Vektoren des polaren Anhängens an die eigene Position mit ausreichend gleich guter Genauigkeit bestimmt werden können und kontrollieren sich somit gegenseitig; damit kann der Empfänger 40 den Vektor des durch den Absender 20 bestimmten Vektors überprüfen und damit den Absender 20 "positionsmäßig" authentifizieren.
Optional ist es erfindungsgemäß insbesondere vorgesehen, dass nicht nur die Positionsdifferenzenvektoren auf Identität geprüft werden, sondern zusätzlich ebenfalls optische Merkmale wie die Fahrzeugform, der Fahrzeugtyp oder die Fahrzeugfarbe geprüft werden, da diese Daten der Zwischenstation 80 als Stammdaten insbesondere bekannt sind und auch elektrooptisch zu t₁ und t₂, also wiederum innerhalb dt=t₂-t₁, ermittelt werden können, um sie mit den Stammdaten vergleichen zu können.

Die in Figur 2 beispielhaft angegebenen Prozessschritte können bzgl. der Verifizierung der Gegenstelle, AINS, d.h. des Absenders 20, erfindungsgemäß insbesondere noch weiter verbessert werden, indem auch vom Empfänger 40 (AFZG) durch das ermittelte Kennzeichen des Absenders 20 (AINS) dieses bei der Zwischenstation 80 auf Anfrage geprüft wird, ob dieser Absender 20 (AINS) wirklich eine Nachricht gesendet hat (insbesondere ist die Zwischenstation 80 in der Lage alle Nachrichten zu protokollieren). Diese zusätzliche Abfrage kann jedoch auch vermieden werden, da sie ein zusätzliches Zeitbudget (von beispielsweise 2*20ms) bedingen würde; darauf kann erfindungsgemäß verzichtet werden, da das erfindungsgemäße Verfahren bereits als sehr sicher eingeschätzt wird. Gleiches gilt für eine exakt gleichzeitige Positionsermittlung in AINS und AFZG durch die Instanzen selber und nicht über polares Anhängen, da dieses zwar nur eine zusätzliche Kommunikation zur Erzeugung einer Gleichzeitigkeit der Messungen in AINS und AFZG bedingen würde, aber diese zusätzliche Kommunikation das Zeitbudget belasten würde.
Erfindungsgemäß wird somit das Zeitfenster dt=t₂-t₁, innerhalb dessen alle notwendigen Daten erhoben werden, minimiert und gleichzeitig wird die gegenseitige Sichtkontrolle (zwecks Positionsdifferenzenermittlung und ggfs. optional auch zwecks Abgleichs optischer Merkmale) als neues die Sicherheit extrem steigerndes Zusatzelement verwendet.
Grobe Richtwerte für Fehlerabschätzungen der Positionsdifferenzenbestimmungen und des Kommunikationszeitbudgets ergeben, dass bei den nachfolgenden Rahmenbedingungen (zum Teil bzgl. insbesondere des Differenzvektors dv=v₂-v₁ etwas willkürlich gewählt, aber geeignet, um die Abhängigkeiten von dv aufzeigen zu können) der Wert Epsilon-f auf den Bereich von ca. 0,2m bis maximal ca. 2m abgeschätzt werden kann:
-- Größe der vektoriellen Geschwindigkeitsdifferenz dv=v₂-v₁ der 2 Teilnehmer AINS und AFZG zu nur geringfügig unterschiedlichen Zeitpunkten t₂ und t₁ (v₁(t₁) von AINS, v₂(t₂) von AFZG; dv als Vektor repräsentiert den absoluten Betrag und eine Richtung; hier beispielhaft 20km/h Geschwindigkeitsdifferenz und 45° Richtungsunterschied zwischen v₁ und v₂),
-- Größe der Zeitdifferenz dt=t₂-t₁=150ms (bei nur 2 benötigten sequentiellen Nachrichten; in diesem Beispiel wären mit 5G-Netzen sogar nur ein halb so großer Wert von 77ms=20ms+40ms+10ms+7ms, erreichbar, wobei: 7ms für die Authentifizierung der Signatur und die Abfragen, 20ms+10ms für die FZG-Loops, 40ms für zwei Nachrichten; bei den FZG-Loops werden 20ms benötigt, um eine Messung nach ihrer Initiierung durchzuführen, aber zum Abgriff eines Loop-Ergebnisses muss im statistischen Mittel nur 10ms gewartet werden, um das Ergebnis abgreifen zu können) und
-- Größe des absoluten 3D-Abstands zwischen Absender 20 und Empfänger 40 (AINS und AFZG) von 30m (das polare Anhängen wird mit größerem Abstand und schlecht erkennbaren Fahrzeugecken ungenauer (d.h. Epsilon-1 bzw. Epsilon-2 vergrößert sich); jedoch ist der Anteil am Gesamtfehler eher klein, falls für dv die obigen Annahmen gelten; wäre jedoch immer dv=0, so hat der 3D-Abstand einen größeren Einfluss auf Epsilon-f als der Zeitunterschied dt und der Abstand kann aktuell z.B. mit Fahrzeug Long Range Radar Sensoren bis zu 250m bestimmt werden und resultiert bei der o.g. 30m Distanz in Epsilon-1=Epsilon-2 auf weniger als 0,30m und im Mittel aus Epsilon-1 und Epsilon-2 ausgemittelt in Epsilon-f von nur 0,20m oder weniger als 0,20m als Fehleranteil (ca. 29% kleiner wegen Fehlerfortpflanzungsgesetz), der bei fiktiven dt=0 oder dv=0 nur aus dem zweimaligen polaren Anhängen resultiert. Für den Fall mit vektoriell dv ist gleich dem Nullvektor (also Betrag(dv)=0) ergibt sich Epsilon-f als der Betrag des arithmetischen Mittels von Epsilon-1 und Epsilon-2; für den Fall mit vektoriell dv und Betrag(dv)>0 ergibt sich Epsilon-f als der Betrag des arithmetischen Mittels von Epsilon-1 und Epsilon-2, zuzüglich eines zusätzlichen Anteils, der linear oder im Wesentlichen linear mit der Größe von dt=t₂-t₁ sowie dem Geschwindigkeitsdifferenzvektor anwächst. Für die Abschätzung von Epsilon-f auf den Bereich von 0,2m bis maximal ca. 2m gilt: Die 0,2m gelten bei ausreichend genauem dv=0 und Annahmen für theoretisch beliebige Gesamtzeitdifferenzen mit pessimistischen dt=150ms und bei dv=0 sogar erlaubten dt<2s (oder sogar <10s für extrem langsame Netze und/oder langsame Zwischenstationen 80); die 2m gelten für obige dv=20km/h und 45Grad Winkel und pessimistischen dt=150ms; 1m gilt für ein Beispiel mit dv=20km/h und 45Grad Winkel und dt=77ms und 3D-Distanz <=30m.
Ob die Epsilon-f-Berechnung oder der anschließende statistische Hypothesentest ggfs. geringfügig nach t₂ erfolgen, ist ohne Bedeutung dafür, ob der Service X vom Empfänger 40 (AFZG) genutzt werden soll. Hierbei ist eher der Abgleich der aktuellen Zeit t₄ im Empfänger 40 (AFZG) mit t₂ von Interesse, wenn der Empfänger 40 (AFZG) den Service X ausführen will.
Ein Zeitbudget von 77ms (zwischen dem ersten und zweiten Zeitpunkt t₁, t₂) folgt aus den Annahmen des jeweiligen Zeitbedarfs der einzelnen Prozessschritte in Fig. 2 wie folgt: sechster und siebter Prozessschritt: 20ms; achter Prozessschritt: 20ms; zehnter Prozessschritt: 5 ms; elfter Prozessschritt: 20ms; zwölfter Prozessschritt: 2ms; dreizehnter, vierzehnter und fünfzehnter Prozessschritt: 10 ms; insgesamt somit 77 ms. Für den Fall, dass insbesondere der Spezialfall v₁(ti)=v₂(ti) im Zeitraum t₁ bis t₂ gilt, so ist Epsilon-f von dt unabhängig (also weitgehend Kommunikationsnetz-unabhängig) und dann kann das Verfahren auch mit langsameren als 5G Netzen angewendet werden, z.B. mit den aktuellen 4G Netzen.
Die Bedingung v_{AINS(ti)}=:v₁₍ₜᵢ₎ = v₂₍ₜᵢ₎:=v_{AFZG(ti)} während t₁ bis t₂ kann z. B. dadurch erreicht werden, dass AINS die Aktion Messung für polares Anhängen zum Zeitpunkt t₁ nur dann startet, wenn es vorher v₁₍ₜₓ₎=v₂₍ₜₓ₎ realisiert hat, also vorher das v₂ von AFZG stetig gemessen hat und sein v₁ darauf angepasst hat. Vereinfacht gesagt bedeutet dies, das AINS den Abstand zu AFZG konstant halten muss und in die gleiche Richtung fahren muss, was problemlos realisiert werden kann. AINS kann diese Vorgänge z.B. idealerweise auf einer Geraden einleiten, da dann Richtungsunterschiede zwischen v₁ und v₂ i.d.R. selten signifikant vorliegen, die aber in einer starken Kurve kaum zu vermeiden wären. AINS hat eine Karteninformation mit Wegen und Krümmungsradien on-board vorliegen und erkennt, ob sich AFZG ausreichend genau während t₁ bis t₂ geradeaus bewegen wird.

Beispielhafte kritische Epsilon-f Werte sind von den Dimensionen beider Teilnehmer (d.h. von Absender 20 und Empfänger 40) abhängig, da aus den elektrooptisch erkannten Dimensionen die Position des Zieles mittels polarem Anhängen ermittelt wird. Für Standard Dimensionen der teilnehmenden Ziele (zum Beispiel der Empfänger 40, AFZG) mit Länge*Breite=6m*2,5m ist es kritisch, wenn Epsilon-f >1,25m in Querrichtung und zugleich >3m in der Längsrichtung einer Ziel-FZG-Ausdehnung erreicht werden (also hier >50% je Länge u. Breite), da sich dann der Absender noch statistisch gesehen (mit gewisser noch relevanter Wahrscheinlichkeit) theoretisch zwar in einem Nachbarfahrzeug zum Ziel (AINS oder AFZG) befinden könnte und trotzdem trotz des Epsilon-f Checks als Absender akzeptiert werden könnte und somit die Authentizität nicht absolut sicher sein kann.
Selbst dieses würde aber durch den optischen Zusatztest auf Merkmale verhindert werden können, sofern nicht auch der optische Zusatztest auf Merkmale geschickt verfälscht wäre, was aber nur möglich ist, falls das Epsilon-f ein Vielfaches der o.a. 50% je Seite betragen würde, aber dann würde der geometrische Epsilon-f Test fehlschlagen und der Service X würde abgelehnt werden.

Die unterschiedliche Dimension bei AINS und AFZG können in der Mittelung von Epsilon-1 und Epsilon-2 und dem zusätzlichen Anteil an Epsilon-f und deren Standardabweichungen mit bekannten Methoden der Fehlerfortpflanzung berücksichtigt werden, um Epsilon-f und dessen resultierenden Fehler SigmaEpsilon-f zu ermitteln. Dies bedeutet, dass im o.g. Beispiel eines Epsilon-f-Werts von 1m bei 77ms Zeitdifferenz jeder Betrugsversuch mittels eines anderen als dem "richtigen" Fahrzeug mit den o. g. Standarddimensionen sicher ausgeschlossen werden kann. Ist beispielsweise der Absender 20 (AINS) ein Polizeifahrzeug, das nahe (<5m) am Empfänger 40 (AFZG) fährt und während t₁ bis t₂ seinen Geschwindigkeitsvektor v₁=v_{AINS} identisch zu v₂=v_{AFZG} realisiert, so ist Epsilon-f sicherlich sogar wesentlich kleiner als 1m und insbesondere sogar kleiner als 0,2m.
Falls andererseits aber das Zeitintervall dt aufgrund von sehr schnellen 5G-Netzen und der Verwendung von leistungsfähigen Prozessoren im Absender 20, Empfänger und Zwischenstation 80 (AINS, AFZG und ZE) - bei lediglich zwei sequentiellen (Teil-)Nachrichten, AINS an ZE und ZE an AFZG) extrem klein (z.B. <100ms), so kann die Geschwindigkeitsdifferenz dv=v₁-v₂ auch wesentlich größere Werte als den Nullvektor annehmen, z. B. in dem Fall, dass AINS eine statische Mautstelle ist und ein AFZG sich mit ca. 30km/h auf die statische Mautstation zubewegt oder an ihr vorbei fährt, was dann i.d.R. in geringem 3D-Abstand erfolgen wird und dann als positiven Effekt den Fehler des polaren Anhängens stark reduziert.
Das resultierende Epsilon-f und sein stochastischer Fehler SigmaEpsilon-f können von der Zwischenstation 80 ausreichend genau berechnet werden, so dass das erfindungsgemäße Verfahren ein sehr hohes Sicherheitsniveau gegenüber Angriffen sicherstellt, wobei auch der Merkmalscheck mit Hypothesentest die Genauigkeit nochmals steigert. Zwar kann die Netz-Kommunikation gestört oder angegriffen werden, aber bekannte Mechanismen wie die Verwendung von Verschlüsselungstechnologie und sonstiger Sicherheitsmechanismen ermöglichen erfindungsgemäß, zusätzlich zu der Authentifizierung des Absenders mittels des erfindungsgemäßen Verfahrens, die Absicherung der Kommunikation so dass der Empfänger 40 (AFZG) in die Lage versetzt wird entweder einen Angriff zu erkennen oder der Empfänger 40 (AFZG) bekommt keine verwertbare/verifizierbare Nachricht/Absender, so dass aus diesem Grund die Aktion der Nachricht nicht ausgeführt wird; somit kommt es also nie zu dem Fall, dass durch einen Angriff der Kommunikation der Empfänger 40 (das AFZG) eine falsche Aktion ausführt oder einer falschen Information des Nachrichteninhaltes vertraut.

Das erfindungsgemäße Verfahren sowie das erfindungsgemäße System, die Zwischenstation 80 und der Empfänger 40 sind auch für nicht autonom oder nicht teilautonom fahrende Fahrzeuge geeignet. Auch ein vollständig vom Fahrer betriebenes Fahrzeug kann daran teilnehmen, sofern es die entsprechende Sensorik und leistungsfähigen Loops hat und auch in der Zwischenstation 80 die jeweiligen, zur Kommunikation erforderlichen Merkmale hinterlegt hat.

Insgesamt wird erfindungsgemäß ein Verfahren und ein entsprechendes System bzw. eine entsprechende Zwischenstation 80 bzw. ein entsprechender Empfänger 40 vorgeschlagen, wobei die nachfolgende Situation betrachtet wird:
Die AINS Instanz (Absender 20) will eine Nachricht an AFZG (Empfänger 40) senden und es soll sichergestellt werden, dass AFZG die AINS absolut sicher authentifiziert damit auch der Nachrichteninhalt der Nachricht als (absolut) unverfälscht gilt. Hierzu ist erfindungsgemäße insbesondere vorgesehen, dass AINS seinen Geschwindigkeitsvektor möglichst gut während eines sehr kurzen Zeitraums dt, von t₁ bis t₂, an den Geschwindigkeitsvektor des AFZG anpasst. Hierbei ist das benötigte Zeitintervall dt aufgrund des genutzten Kommunikationsnetzes sicher abschätzbar. Zur Sicherheit wird AINS die Anpassung der Geschwindigkeit sogar bis (zum späteren Zeitpunkt) tₐ und nicht nur bis t₂ fortführen, wobei tₐ aus der Abschätzung von dt=t₂-t₁ (bzw. t₂=t₁+dt) und tₐ=t₂ + Sicherheitszuschlag folgt.
Kurz nach t₂ kann die Zwischenstation 80 zunächst die erste und zweite Positionsabweichung ermitteln und zusätzliche eine Größe Epsilon-f, die für einen Hypothesentest genutzt wird. Dieser Test führt auf eine Irrtumswahrscheinlichkeit in Abhängigkeit von Epsilon-f, die den Zugewinn des Verfahrens der Erfindung gegenüber bisher bekannten Methoden darstellt. Durch die Kombination bekannter Verfahren mit dem Verfahren der Erfindung ist zu erwarten, dass die Authentifizierung des Absenders AINS absolut sicher realisiert werden kann.
Im achtzehnten Prozessschritt 218 gemäß Figur 2 wird die Authentisierung des Empfängers 40 durchgeführt, insbesondere anhand der Signaturinformation des Empfängers 40, d.h. unter Nutzung von üblichen Verfahren zur Absicherung der Authentisierung, etwa mittels Verschlüsselungsverfahren. Insbesondere wird ferner erfindungsgemäß zusätzlich auch der optionale Check auf optische Merkmale durchgeführt, wobei der optionale Check auf optische Merkmale ggf. auch erst erfolgt (bzw. lediglich dann erfolgt), nachdem der Epsilon-f Test erfolgt ist, sofern dieser- in Kombination und unter Nutzung von üblichen Verfahren zur Absicherung der Authentisierung, etwa mittels Verschlüsselungsverfahren - als noch zu unsicher gelten würde, wodurch man in den allermeisten Fällen Zeit einsparen würde.

Insgesamt wird somit ein Verfahren zum Authentifizieren des Absenders AINS einer nur kabellos via einer Relay Station (Zentrale ZE) übermittelten Nachricht an ein teilautonom oder autonom gesteuertes kinematisches Fahrzeug von der autorisierten Instanz AINS an eine autonom fahrenden Einheit AFZG mit der Besonderheit, dass mittels der zu unterschiedlichen Zeitpunkten t₁ und t₂=t₁+dt bestimmten Koordinatendifferenzen im elektrooptischen Gegensichtverfahren zwischen AINS und AFZG eine Kontrolle möglich ist, ob die relative Lage zwischen beiden Teilnehmern ausreichend genau gleich geblieben ist und sich kein anderer Teilnehmer unzulässigerweise an dem gleichen Ort befinden kann (d.h. es wird ein MITM-Angriff (Man-in-the-middle-Angriff) mit physischer Anwesenheit des Angreifers ausgeschlossen). Insbesondere wird erfindungsgemäß die Authentizität zusätzlich mittels optischer Merkmale überprüft, die mittels der on-board Sensoren der Teilnehmer on-the-fly erhoben werden und mit den Sollwerten aus der Zwischenstation abgeglichen werden. Optional richtet der Absender (AINS) seine Geschwindigkeit optional an dem Empfänger (AFZG) während eines prognostizierbaren Zeitintervalls dt=t₂-t₁ aus, wobei das Zeitintervall als Funktion des genutzten Kommunikationsnetzes und insbesondere seiner Latenzzeit gewählt wird. Insbesondere wird die Nachricht bzw. die entsprechenden Teilnachrichten zwischen den Teilnehmern Absender 20, Empfänger 40 und Zwischenstation 80 über ein schnelles Kommunikationsnetzwerk, insbesondere ein Mobilfunknetzwerk nach dem Standard 5G oder ein pWLAN-Netzwerk, übertragen, wobei die Übertragung der Datennachrichten mit einer Latenzzeit von maximal 5 ms, insbesondere von maximal 3 ms, insbesondere von maximal 1 ms, erfolgt.

## Patentansprüche

1. Verfahren zum Authentifizieren des Absenders (20) einer Nachricht durch den Empfänger (40) der Nachricht, wobei die Nachricht drahtlos über eine Zwischenstation (80) übertragen wird, wobei der Empfänger (40) der Nachricht ein teilautonom oder autonom gesteuertes, sich bewegendes Fahrzeug oder ein stationäres Objekt ist, wobei der Absender (20) zu unterschiedlichen Zeitpunkten potenziell unterschiedliche Absenderpositionen (21, 22) aufweist und der Empfänger (40) zu unterschiedlichen Zeitpunkten potenziell unterschiedliche Empfängerpositionen (41, 42) aufweist, wobei das Verfahren die nachfolgenden Schritte umfasst:
-- in einem ersten Schritt wird zu einem ersten Zeitpunkt durch den Absender (20) eine erste Absenderposition (21) und eine erste Empfängerposition (41) bestimmt und es wird eine erste Teilnachricht zur Zwischenstation (80) gesendet, wobei die erste Teilnachricht die erste Absenderposition (21) und die erste Empfängerposition (41) umfasst,
-- in einem zweiten Schritt wird zu einem nachfolgenden zweiten Zeitpunkt durch den Empfänger (40) eine zweite Empfängerposition (42), eine zweite Empfängergeschwindigkeit (42') und eine zweite Absenderposition (22) bestimmt und es wird eine zweite Teilnachricht zur Zwischenstation (80) gesendet, wobei die zweite Teilnachricht die zweite Empfängerposition (42), die zweite Empfängergeschwindigkeit (42') und die zweite Absenderposition (22) umfasst,
-- in einem dritten Schritt wird durch die Zwischenstation (80) aus der ersten Empfängerposition (41), der zweiten Empfängergeschwindigkeit (42') und der zweiten Empfängerposition (42) eine erste Positionsabweichung hinsichtlich des Empfängers (40) und aus der ersten Absenderposition (21) und der zweiten Absenderposition (22) eine zweite Positionsabweichung hinsichtlich des Absenders (20) bestimmt, und der Absender (20) der Nachricht authentifiziert, wenn die erste und zweite Positionsabweichung kleiner sind als ein vorgegebener Maximalwert, und eine dritte Teilnachricht zum Empfänger (40) gesendet.

2. Verfahren nach Anspruch 1, **dadurch gekennzeichnet, dass** die Bestimmung - im ersten Schritt - der ersten Empfängerposition (41) durch den Absender (20) und die Bestimmung - im zweiten Schritt - der zweiten Absenderposition (21) durch den Empfänger (40) jeweils mittels eines optischen oder elektrooptischen Verfahrens zur Positionsdifferenzenermittlung zwischen Absender (20) und Empfänger (40) erfolgt, wobei die Zeitdifferenz zwischen dem ersten und dem zweiten Zeitpunkt kleiner als oder gleich 200 ms ist.

3. Verfahren nach einem der vorhergehenden Ansprüche, **dadurch gekennzeichnet, dass** - zusätzlich zur Ermittlung der Positionsdifferenzen zwischen Absender (20) und Empfänger (40) - optische Merkmale oder optische Fahrzeugmerkmale des Empfängers (40) und/oder des Absenders (20) ermittelt oder bestimmt oder erkannt werden, um den Absender (20) der Nachricht zu authentifizieren,
wobei als optische Fahrzeugmerkmale
-- die Fahrzeugform und/oder
-- die Fahrzeugfarbe und/oder
-- das Fahrzeugkennzeichen und/oder
-- der Fahrzeugtyp und/oder
-- Fahrzeugmaße
des Absenders (20) durch den Empfänger (40) ermittelt oder bestimmt oder erkannt werden.

4. Verfahren nach einem der vorhergehenden Ansprüche, **dadurch gekennzeichnet, dass** - zeitlich vor der Durchführung des ersten Schritts - die Geschwindigkeitsdifferenz zwischen Absender (20) und Empfänger (40) kleiner als oder gleich 50 km/h ist, wobei die Geschwindigkeitsdifferenz dem Betrag des Geschwindigkeitsdifferenzvektors zwischen Absender (20) und Empfänger (40) entspricht.

5. Verfahren nach einem der vorhergehenden Ansprüche, **dadurch gekennzeichnet, dass** im ersten Schritt zum ersten Zeitpunkt durch den Absender (20) neben der ersten Absenderposition (21) und der ersten Empfängerposition (41) zusätzlich eine erste Absendergeschwindigkeit (21') bestimmt und als Teil der zweiten Teilnachricht zur Zwischenstation (80) gesendet wird, wobei im dritten Schritt durch die Zwischenstation (80) die zweite Positionsabweichung hinsichtlich des Absenders (20) aus der ersten Absenderposition (21), der ersten Absendergeschwindigkeit (21') und der zweiten Absenderposition (22) bestimmt wird.

6. Verfahren nach einem der vorhergehenden Ansprüche, **dadurch gekennzeichnet, dass** die Zwischenstation (80) wenigstens ein Teil der nachfolgenden oder alle nachfolgenden Stammdaten des Absenders (20) und/oder des Empfängers (40) umfasst oder darauf Zugriff hat:
-- eines oder mehrere Zertifikate, -- optische Fahrzeugmerkmale,
-- Fahrzeugkennzeichen,
-- Fahrzeugtyp und/oder Fahrzeugmaße,
-- Definition der Lage oder Positionierung der Eigenposition,
-- eine eindeutige Identitätsinformation, -- eine aktuelle Statusinformation hinsichtlich des Empfängers (40) und/oder des Absenders (20),
-- eine Information hinsichtlich erlaubter oder möglicher Nachrichteninhalte und/oder Befehlsinhalte für Dienste.

7. Verfahren nach einem der vorhergehenden Ansprüche, **dadurch gekennzeichnet, dass** die erste Teilnachricht, die zweite Teilnachricht und die dritte Teilnachricht über ein Mobilfunkkommunikationsnetz übertragen wird, wobei die Übertragung der ersten, zweiten und dritten Teilnachricht mit einer Latenzzeit von kleiner als oder gleich 5 ms erfolgt.

8. Verfahren nach einem der vorhergehenden Ansprüche, **dadurch gekennzeichnet, dass** die Nachricht oder der Nachrichteninhalt der Nachricht vom Absender (20) zum Empfänger (40) mittels oder als Teil der ersten Teilnachricht und der dritten Teilnachricht übertragen wird, wobei die Nachricht oder der Nachrichteninhalt als Teil der ersten und dritten Teilnachricht verschlüsselt übertragen wird.

9. System zum Authentifizieren des Absenders (20) einer Nachricht durch den Empfänger (40) der Nachricht, wobei die Nachricht drahtlos über eine Zwischenstation (80) übertragen wird, wobei der Empfänger (40) der Nachricht ein teilautonom oder autonom gesteuertes, sich bewegendes Fahrzeug oder ein stationäres Objekt ist, wobei der Absender (20) zu unterschiedlichen Zeitpunkten potenziell unterschiedliche Absenderpositionen (21, 22) aufweist und der Empfänger (40) zu unterschiedlichen Zeitpunkten potenziell unterschiedliche Empfängerpositionen (41, 42) aufweist, wobei das System derart konfiguriert ist, dass:
-- zu einem ersten Zeitpunkt durch den Absender (20) eine erste Absenderposition (21) und eine erste Empfängerposition (41) bestimmt wird und eine erste Teilnachricht zur Zwischenstation (80) gesendet wird, wobei die erste Teilnachricht die erste Absenderposition (21) und die erste Empfängerposition (41) umfasst,
-- zu einem nachfolgenden zweiten Zeitpunkt durch den Empfänger (40) eine zweite Empfängerposition (42), eine zweite Empfängergeschwindigkeit (42') und eine zweite Absenderposition (22) bestimmt wird und eine zweite Teilnachricht zur Zwischenstation (80) gesendet wird, wobei die zweite Teilnachricht die zweite Empfängerposition (42), die zweite Empfängergeschwindigkeit (42') und die zweite Absenderposition (22) umfasst,
-- durch die Zwischenstation (80) aus der ersten Empfängerposition (41), der zweiten Empfängergeschwindigkeit (42') und der zweiten Empfängerposition (42) eine erste Positionsabweichung hinsichtlich des Empfängers (40) und aus der ersten Absenderposition (21) und der zweiten Absenderposition (22) eine zweite Positionsabweichung hinsichtlich des Absenders (20) bestimmt wird, der Absender (20) der Nachricht authentifiziert wird, wenn die erste und zweite Positionsabweichung kleiner sind als ein vorgegebener Maximalwert, und eine dritte Teilnachricht zum Empfänger gesendet wird.

10. Zwischenstation (80) zum Authentifizieren des Absenders (20) einer Nachricht durch den Empfänger (40) der Nachricht, wobei die Nachricht drahtlos über die Zwischenstation (80) übertragen wird, wobei der Empfänger (40) der Nachricht ein teilautonom oder autonom gesteuertes, sich bewegendes Fahrzeug oder ein stationäres Objekt ist, wobei der Absender (20) zu unterschiedlichen Zeitpunkten potenziell unterschiedliche Absenderpositionen (21, 22) aufweist und der Empfänger (40) zu unterschiedlichen Zeitpunkten potenziell unterschiedliche Empfängerpositionen (41, 42) aufweist, wobei die Zwischenstation (80) derart konfiguriert ist, dass:
-- die Zwischenstation (80) eine erste Teilnachricht empfängt, wobei die erste Teilnachricht eine zu einem ersten Zeitpunkt durch den Absender (20) bestimmte erste Absenderposition (21) und eine zum ersten Zeitpunkt durch den Absender (20) bestimmte erste Empfängerposition (41) umfasst,
-- die Zwischenstation (80) eine zweite Teilnachricht empfängt, wobei die zweite Teilnachricht eine zu einem nachfolgenden zweiten Zeitpunkt durch den Empfänger (40) bestimmte zweite Empfängerposition (42), eine zum zweiten Zeitpunkt durch den Empfänger (40) bestimmte zweite Empfängergeschwindigkeit (42') und eine zum zweiten Zeitpunkt durch den Empfänger (40) bestimmte zweite Absenderposition (22) umfasst,
-- durch die Zwischenstation (80) aus der ersten Empfängerposition (41), der zweiten Empfängergeschwindigkeit (42') und der zweiten Empfängerposition (42) eine erste Positionsabweichung hinsichtlich des Empfängers (40) und aus der ersten Absenderposition (21) und der zweiten Absenderposition (22) eine zweite Positionsabweichung hinsichtlich des Absenders (20) bestimmt wird, der Absender (20) der Nachricht authentifiziert wird, wenn die erste und zweite Positionsabweichung kleiner sind als ein vorgegebener Maximalwert, und eine dritte Teilnachricht zum Empfänger (40) gesendet wird.

11. Empfänger (40) zum Authentifizieren des Absenders (20) einer Nachricht durch den Empfänger (40) der Nachricht, wobei die Nachricht drahtlos über eine Zwischenstation (80) übertragen wird, wobei der Empfänger (40) der Nachricht ein teilautonom oder autonom gesteuertes, sich bewegendes Fahrzeug oder ein stationäres Objekt ist, wobei der Absender (20) zu unterschiedlichen Zeitpunkten potenziell unterschiedliche Absenderpositionen (21, 22) aufweist und der Empfänger (40) zu unterschiedlichen Zeitpunkten potenziell unterschiedliche Empfängerpositionen (41, 42) aufweist, wobei der Empfänger (40) derart konfiguriert ist, dass:
-- zu einem zweiten Zeitpunkt - nachdem in einem ersten Schritt zu einem ersten Zeitpunkt durch den Absender (20) eine erste Absenderposition (21) und eine erste Empfängerposition (41) bestimmt und als Teil einer ersten Teilnachricht zur Zwischenstation (80) gesendet wurde - durch den Empfänger (40) eine zweite Empfängerposition (42), eine zweite Empfängergeschwindigkeit (42') und eine zweite Absenderposition (22) bestimmt und eine zweite Teilnachricht zur Zwischenstation (80) gesendet wird, wobei die zweite Teilnachricht die zweite Empfängerposition (42), die zweite Empfängergeschwindigkeit (42') und die zweite Absenderposition (22) umfasst, und
-- durch den Empfänger (40) eine dritte Teilnachricht empfangen wird, nachdem durch die Zwischenstation (80) aus der ersten Empfängerposition (41), der zweiten Empfängergeschwindigkeit (42') und der zweiten Empfängerposition (42) eine erste Positionsabweichung hinsichtlich des Empfängers (40) und aus der ersten Absenderposition (21) und der zweiten Absenderposition (22) eine zweite Positionsabweichung hinsichtlich des Absenders (20) bestimmt wird und der Absender (20) der Nachricht authentifiziert wird, wenn die erste und zweite Positionsabweichung kleiner sind als ein vorgegebener Maximalwert ist.

12. Computerprogramm umfassend Befehle, mit deren Hilfe die Schritte eines Verfahrens nach einem der Ansprüche 1 bis 8 durchführbar sind, wenn das Computerprogramm auf einer programmierbaren Einrichtung ausgeführt wird.

13. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 11 speichert oder überträgt oder wobei das computerlesbare Medium oder das Datenträgersignal den auf der programmierbaren Einrichtung auszuführenden Teil des Computerprogramms nach Anspruch 12 speichert oder überträgt.

## Claims

1. Method for authenticating the sender (20) of a message by the recipient (40) of the message, wherein the message is transmitted wirelessly via an intermediate station (80), wherein the recipient (40) of the message is a semi-autonomously or autonomously controlled moving vehicle or a stationary object, wherein the sender (20) is at potentially different sender positions (21, 22) at different points in time and the recipient (40) is at potentially different recipient positions (41, 42) at different points in time, wherein the method comprises the following steps:
- in a first step, at a first point in time, a first sender position (21) and a first recipient position (41) are determined by the sender (20), and a first partial message is sent to the intermediate station (80), wherein the first partial message comprises the first sender position (21) and the first recipient position (41),
- in a second step, at a subsequent second point in time, a second recipient position (42), a second recipient speed (42') and a second sender position (22) are determined by the recipient (40), and a second partial message is sent to the intermediate station (80), wherein the second partial message comprises the second recipient position (42), the second recipient speed (42') and the second sender position (22),
- in a third step, by means of the intermediate station (80) a first position deviation with respect to the recipient (40) is determined from the first recipient position (41), the second recipient speed (42') and the second recipient position (42) and a second position deviation with respect to the sender (20) is determined from the first sender position (21) and the second sender position (22), and the sender (20) of the message is authenticated when the first and second position deviation are less than a preset maximum value, and a third partial message is sent to the recipient (40).

2. Method as claimed in claim 1, **characterised in that** the determination - in the first step - of the first recipient position (41) by the sender (20) and the determination - in the second step - of the second sender position (21) by the recipient (40) are each effected by means of an optical or electrooptical method for position difference detection between sender (20) and recipient (40), wherein the time difference between the first and the second point in time is less than or equal to 200 ms.

3. Method as claimed in any one of the preceding claims, **characterised in that** - in addition to the detection of the position differences between sender (20) and recipient (40)
- visual features or visual vehicle features of the recipient (40) and/or of the sender (20) are detected or determined or recognised in order to authenticate the sender (20) of the message, wherein
- the vehicle shape and/or
- the vehicle colour and/or
- the vehicle number plate and/or
- the vehicle type and/or
- vehicle dimensions
of the sender (20) are detected, determined or recognised as visual vehicle features by the recipient (40).

4. Method as claimed in any one of the preceding claims, **characterised in that** - prior to the first step being carried out - the speed difference between sender (20) and recipient (40) is less than or equal to 50 km/hr, wherein the speed difference corresponds to the magnitude of the speed difference vector between sender (20) and recipient (40) .

5. Method as claimed in any one of the preceding claims, **characterised in that** in the first step, at the first point in time, a first sender speed (21') is determined by the sender (20) in addition to the first sender position (21) and the first recipient position (41) and is sent to the intermediate station (80) as part of the second partial message, wherein in the third step, the second position deviation with respect to the sender (20) is determined by the intermediate station (80) from the first sender position (21), the first sender speed (21') and the second sender position (22).

6. Method as claimed in any one of the preceding claims, **characterised in that** the intermediate station (80) comprises at least a part of the subsequent or all subsequent master data of the sender (20) and/or of the recipient (40) or has access thereto:
- one or more certificates,
- visual vehicle features,
- vehicle number plate,
- vehicle type and/or vehicle dimensions,
- definition of the location or positioning of its own position,
- clear identification information,
- current status information with respect to the recipient (40) and/or the sender (20),
- information relating to permitted or possible message contents and/or command contents for services.

7. Method as claimed in any one of the preceding claims, **characterised in that** the first partial message, the second partial message and the third partial message are transmitted via a mobile communication network, wherein the transmission of the first, second and third partial message is effected with a latency of less than or equal to 5 ms.

8. Method as claimed in any one of the preceding claims, **characterised in that** the message or the message content of the message is transmitted from the sender (20) to the recipient (40) by means of, or as part of, the first partial message and the third partial message, wherein the message or the message content is transmitted in encrypted form as part of the first and third partial message.

9. System for authenticating the sender (20) of a message by the recipient (40) of the message, wherein the message is transmitted wirelessly via an intermediate station (80), wherein the recipient (40) of the message is a semi-autonomously or autonomously controlled moving vehicle or a stationary object, wherein the sender (20) is at potentially different sender positions (21, 22) at different points in time and the recipient (40) is at potentially different recipient positions (41, 42) at different points in time, wherein the system is configured in such a way that:
- at a first point in time, a first sender position (21) and a first recipient position (41) are determined by the sender (20), and a first partial message is sent to the intermediate station (80), wherein the first partial message comprises the first sender position (21) and the first recipient position (41),
- at a subsequent second point in time, a second recipient position (42), a second recipient speed (42') and a second sender position (22) are determined by the recipient (40), and a second partial message is sent to the intermediate station (80), wherein the second partial message comprises the second recipient position (42), the second recipient speed (42') and the second sender position (22),
- by means of the intermediate station (80) a first position deviation with respect to the recipient (40) is determined from the first recipient position (41), the second recipient speed (42') and the second recipient position (42) and a second position deviation with respect to the sender (20) is determined from the first sender position (21) and the second sender position (22), the sender (20) of the message is authenticated when the first and second position deviation are less than a preset maximum value, and a third partial message is sent to the recipient.

10. Intermediate station (80) for authenticating the sender (20) of a message by the recipient (40) of the message, wherein the message is transmitted wirelessly via the intermediate station (80), wherein the recipient (40) of the message is a semi-autonomously or autonomously controlled moving vehicle or a stationary object, wherein the sender (20) is at potentially different sender positions (21, 22) at different points in time and the recipient (40) is at potentially different recipient positions (41, 42) at different points in time, wherein the intermediate station (80) is configured in such a way that:
- the intermediate station (80) receives a first partial message, wherein the first partial message comprises a first sender position (21) determined by the sender (20) at a first point in time and a first recipient position (41) determined by the sender (20) at the first point in time,
- the intermediate station (80) receives a second partial message, wherein the second partial message comprises a second recipient position (42) determined by the recipient (40) at a subsequent second point in time, a second recipient speed (42') determined by the recipient (40) at the second point in time and a second sender position (22) determined by the recipient (40) at the second point in time,
- by means of the intermediate station (80) a first position deviation with respect to the recipient (40) is determined from the first recipient position (41), the second recipient speed (42') and the second recipient position (42) and a second position deviation with respect to the sender (20) is determined from the first sender position (21) and the second sender position (22), the sender (20) of the message is authenticated when the first and second position deviation are less than a preset maximum value, and a third partial message is sent to the recipient (40).

11. Recipient (40) for authenticating the sender (20) of a message by the recipient (40) of the message, wherein the message is transmitted wirelessly via an intermediate station (80), wherein the recipient (40) of the message is a semi-autonomously or autonomously controlled moving vehicle or a stationary object, wherein the sender (20) is at potentially different sender positions (21, 22) at different points in time and the recipient (40) is at potentially different recipient positions (41, 42) at different points in time, wherein the recipient (40) is configured in such a way that:
- at a second point in time - after a first sender position (21) and a first recipient position (41) have been determined in a first step at a first point in time by the sender (20) and have been sent to the intermediate station (80) as part of a first partial message - by means of the recipient (40) a second recipient position (42), a second recipient speed (42') and a second sender position (22) are determined, and a second partial message is sent to the intermediate station (80), wherein the second partial message comprises the second recipient position (42), the second recipient speed (42') and the second sender position (22), and
- by means of the recipient (40) a third partial message is received after, by means of the intermediate station (80), first position deviation with respect to the recipient (40) is determined from the first recipient position (41), the second recipient speed (42') and the second recipient position (42) and a second position deviation with respect to the sender (20) is determined from the first sender position (21) and the second sender position (22), and the sender (20) of the message is authenticated when the first and second position deviation are less than a preset maximum value.

12. Computer program comprising commands, with the aid of which the steps of a method as claimed in any one of claims 1 to 8 can be carried out when the computer program is executed on a programmable device.

13. Computer-readable medium, provided for storage of a computer program, or data carrier signal, provided for the transmission of a computer program, wherein the computer-readable medium or the data carrier signal stores or transmits the computer program as claimed in claimed 11, or wherein the computer-readable medium or the data carrier signal stores or transmits the part of the computer program as claimed in claim 12 to be executed on the programmable device.

## Revendications

1. Procédé d'authentification de l'expéditeur (20) d'un message par le destinataire (40) dudit message, dans lequel le message est transmis de manière sans fil via une station intermédiaire (80), dans lequel le destinataire (40) du message est un véhicule en mouvement, piloté de manière partiellement autonome ou autonome, ou un objet statique, dans lequel l'expéditeur (20) présente des positions d'expéditeur (21, 22) potentiellement différentes à différents instants et le destinataire (40) présente des positions de destinataire (41, 42) potentiellement différentes à différents instants, dans lequel le procédé comprend les étapes suivantes consistant à :
- à une première étape, une première position d'expéditeur (21) et une première position de destinataire (41) sont déterminées à un premier instant par l'expéditeur (20), et un premier sous-message est envoyé à la station intermédiaire (80), dans lequel le premier sous-message comprend la première position d'expéditeur (21) et la première position de destinataire (41),
- à une deuxième étape, une seconde position de destinataire (42), une seconde vitesse de destinataire (42') et une seconde position d'expéditeur (22) sont déterminées par l'expéditeur (40) à un second instant suivant, et un deuxième sous-message est envoyé à la station intermédiaire (80), dans lequel le deuxième sous-message comprend la seconde position de destinataire (42), la seconde vitesse de destinataire (42') et la seconde position d'expéditeur (22),
- à une troisième étape, un premier écart de position concernant le destinataire (40) est déterminé par la station intermédiaire (80) à partir de la première position de destinataire (41), de la seconde vitesse de destinataire (42') et de la seconde position de destinataire (42), et un second écart de position concernant l'expéditeur (20) est déterminé à partir de la première position d'expéditeur (21) et de la seconde position d'expéditeur (22), et l'expéditeur (20) du message est authentifié lorsque les premier et second écarts de position sont inférieurs à une valeur maximale prédéfinie, et un troisième sous-message est envoyé au destinataire (40).

2. Procédé selon la revendication 1, **caractérisé en ce que** la détermination - à la première étape - de la première position de destinataire (41) est effectuée par l'expéditeur (20) et la détermination - à la deuxième étape - de la seconde position d'expéditeur (21) est effectuée par le destinataire (40), respectivement, au moyen d'un procédé optique ou électro-optique pour déterminer une différence de position entre l'expéditeur (20) et le destinataire (40), dans lequel la différence de temps entre les premier et second instants est inférieure ou égale à 200 ms.

3. Procédé selon l'une des revendications précédentes, **caractérisé en ce que** - en plus de la détermination des différences de position entre l'expéditeur (20) et le destinataire (40) - des caractéristiques optiques et/ou des caractéristiques optiques de véhicule du destinataire (40) et/ou de l'expéditeur (20) sont établies ou déterminées ou reconnues afin d'authentifier l'expéditeur (20) du message, dans lequel
- la forme de véhicule et/ou
- la couleur de véhicule et/ou
- le numéro d'immatriculation de véhicule et/ou
- le type de véhicule et/ou
- des dimensions du véhicule
de l'expéditeur sont établis ou déterminés ou reconnus par l'expéditeur (40) en tant que caractéristiques optiques de véhicule.

4. Procédé selon l'une des revendications précédentes, **caractérisé en ce que** - chronologiquement avant la réalisation de la première étape - la différence de vitesse entre l'expéditeur (20) et le destinataire (40) est inférieure ou égale à 50 km/h, dans lequel la différence de vitesse correspond à la grandeur du vecteur de différence de vitesse entre l'expéditeur (20) et le destinataire (40).

5. Procédé selon l'une des revendications précédentes, **caractérisé en ce qu'**à la première étape, une première vitesse d'expéditeur (21') est déterminée au premier instant par l'expéditeur (20), en plus de la première position d'expéditeur (21) et de la première position de destinataire (41), et est envoyée à la station intermédiaire (80) en tant que partie du deuxième sous-message, dans lequel, à la troisième étape, le second écart de position concernant l'expéditeur (20) est déterminé par la station intermédiaire (80) à partir de la première position d'expéditeur (21), de la première vitesse d'expéditeur (21') et de la seconde position d'expéditeur (22) .

6. Procédé selon l'une des revendications précédentes, **caractérisé en ce que** la station intermédiaire (80) comprend au moins une partie des données de base suivantes ou toutes les données de base suivantes de l'expéditeur (20) et/ou du destinataire (80) ou a accès à :
- un ou plusieurs certificats,
- des caractéristiques optiques de véhicule,
- des numéros d'immatriculation de véhicule,
- un type de véhicule et/ou des dimensions de véhicule,
- la définition de l'emplacement ou du positionnement de la position spécifique,
- une information d'identité univoque,
- une information d'état actuelle concernant le destinataire (40) et/ou l'expéditeur (20),
- une information concernant des contenus de message et/ou des contenus d'instruction autorisés ou possibles pour des services.

7. Procédé selon l'une des revendications précédentes, **caractérisé en ce que** le premier sous-message, le deuxième sous-message et le troisième sous-message sont transmis via un réseau de radiocommunications mobiles, dans lequel les premier, deuxième et troisième sous-messages sont transmis avec un temps de latence inférieur ou égal à 5 ms.

8. Procédé selon l'une des revendications précédentes, **caractérisé en ce que** le message ou le contenu de message du message de l'expéditeur (20) au destinataire (40) est transmis au moyen ou en tant que partie du premier sous-message et du troisième sous-message, dans lequel le message ou le contenu de message est transmis de manière cryptée en tant que partie des premier et troisième sous-messages.

9. Système d'authentification de l'expéditeur (20) d'un message par le destinataire (40) dudit message, dans lequel le message est transmis de manière sans fil via une station intermédiaire (80), dans lequel le destinataire (40) du message est un véhicule en mouvement, piloté de manière partiellement autonome ou autonome, ou un objet statique, dans lequel l'expéditeur (20) présente des positions d'expéditeur (21, 22) potentiellement différentes à différents instants et le destinataire (40) présente des positions de destinataire (41, 42) potentiellement différentes à différents instants, dans lequel le système est configuré de telle sorte que :
- à un premier instant, une première position d'expéditeur (21) et une première position de destinataire (41) sont déterminées par l'expéditeur (20) et un premier sous-message est envoyé à la station intermédiaire (80), dans lequel le premier sous-message comprend la première position d'expéditeur (21) et la première position de destinataire (41),
- à un second instant suivant, une seconde position de destinataire (42), une seconde vitesse de destinataire (42') et une seconde position d'expéditeur (22) sont déterminées par l'expéditeur (40), et un deuxième sous-message est envoyé à la station intermédiaire (80), dans lequel le deuxième sous-message comprend la seconde position de destinataire (42), la seconde vitesse de destinataire (42') et la seconde position d'expéditeur (22),
- un premier écart de position concernant le destinataire (40) est déterminé par la station intermédiaire (80) à partir de la première position de destinataire (41), de la seconde vitesse de destinataire (42') et de la seconde position de destinataire (42), et un second écart de position concernant l'expéditeur (20) est déterminé à partir de la première position d'expéditeur (21) et de la seconde position d'expéditeur (22), l'expéditeur (20) du message est authentifié lorsque les premier et second écarts de position sont inférieurs à une valeur maximale prédéfinie, et un troisième sous-message est envoyé au destinataire.

10. Station intermédiaire (80) d'authentification de l'expéditeur (20) d'un message par le destinataire (40) dudit message, dans laquelle le message est transmis de manière sans fil via la station intermédiaire (80), dans laquelle le destinataire (40) du message est un véhicule en mouvement, piloté de manière partiellement autonome ou autonome, ou un objet statique, dans laquelle l'expéditeur (20) présente des positions d'expéditeur (21, 22) potentiellement différentes à différents instants et le destinataire (40) présente des positions de destinataire (41, 42) potentiellement différentes à différents instants, dans laquelle la station intermédiaire (80) est configurée de telle sorte que :
- la station intermédiaire (80) reçoit un premier sous-message, dans laquelle le premier sous-message comprend une première position d'expéditeur (21) déterminée à un premier instant par l'expéditeur (20) et une première position de destinataire (41) déterminée au premier instant par l'expéditeur (20),
- la station intermédiaire (80) reçoit un deuxième sous-message, dans laquelle le deuxième sous-message comprend une seconde position de destinataire (42) déterminée à un second instant suivant par le destinataire (40), une seconde vitesse de destinataire (42') déterminée au second instant par le destinataire (40) et une seconde position d'expéditeur (22) déterminée au second instant par le destinataire (40),
- un premier écart de position concernant le destinataire (40) est déterminé par la station intermédiaire (80) à partir de la première position de destinataire (41), de la seconde vitesse de destinataire (42') et de la seconde position de destinataire (42), et un second écart de position concernant l'expéditeur (20) est déterminé à partir de la première position d'expéditeur (21) et de la seconde position d'expéditeur (22), l'expéditeur (20) du message est authentifié lorsque les premier et second écarts de position sont inférieurs à une valeur maximale prédéfinie, et un troisième sous-message est envoyé au destinataire (40).

11. Destinataire (40) destiné à authentifier l'expéditeur (20) d'un message par le destinataire (40) dudit message, dans lequel le message est transmis de manière sans fil via une station intermédiaire (80), dans lequel le destinataire (40) du message est un véhicule en mouvement, piloté de manière partiellement autonome ou autonome, ou un objet statique, dans lequel l'expéditeur (20) présente des positions d'expéditeur (21, 22) potentiellement différentes à différents instants et le destinataire (40) présente des positions de destinataire (41, 42) potentiellement différentes à différents instants, dans lequel le destinataire (40) est configuré de telle sorte que :
- à un second instant - après la détermination par l'expéditeur (20), à une première étape, d'une première position d'expéditeur (21) et d'une première position de destinataire (41) à un premier instant et leur transmission à la station intermédiaire (80) en tant que partie d'un premier sous-message - une seconde position de destinataire (42), une seconde vitesse de destinataire (42') et une seconde position d'expéditeur (22) sont déterminées par le destinataire (40), et un deuxième sous-message est envoyé à la station intermédiaire (80), dans lequel le deuxième sous-message comprend la seconde position de destinataire (42), la seconde vitesse de destinataire (42') et la seconde position d'expéditeur (22), et
- un troisième sous-message est reçu par le destinataire (40), après la détermination par la station intermédiaire (80) d'un premier écart de position concernant le destinataire (40) à partir de la première position de destinataire (41), de la seconde vitesse de destinataire (42') et de la seconde position de destinataire (42), et la détermination d'un second écart de position concernant l'expéditeur (20) à partir de la première position d'expéditeur (21) et de la seconde position d'expéditeur (22), et l'expéditeur (20) du message est authentifié lorsque les premier et second écarts de position sont inférieurs à une valeur maximale prédéfinie.

12. Programme informatique comprenant des instructions au moyen desquelles les étapes d'un procédé selon l'une des revendications 1 à 8 peuvent être réalisées lorsque le programme informatique est exécuté sur un dispositif programmable.

13. Support lisible par ordinateur, destiné à stocker un programme informatique, ou signal porteur de données destiné à transmettre un programme informatique, dans lequel le support lisible par ordinateur ou le signal porteur de données stocke ou transmet le programme informatique selon la revendication 11, ou dans lequel le support lisible par ordinateur ou le signal porteur de données stocke ou transmet la partie du programme informatique selon la revendication 12 à exécuter sur le dispositif programmable.
